(19) Europäisches Patentamt
European Patent Office
Office européen des brevets

(11) **EP 4 266 106 A1**

(12) **EUROPEAN PATENT APPLICATION**
published in accordance with Art. 153(4) EPC

(43) Date of publication:
**25.10.2023  Bulletin 2023/43**

(21) Application number: **22739385.7**

(22) Date of filing: **11.01.2022**

(51) International Patent Classification (IPC):
**G02B 17/06** (2006.01)     **G02B 5/10** (2006.01)

(52) Cooperative Patent Classification (CPC):
**G02B 5/10; G02B 17/06**

(86) International application number:
**PCT/JP2022/000568**

(87) International publication number:
**WO 2022/153978 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.01.2021  JP 2021003118**

(71) Applicant: **The University of Tokyo**
**Bunkyo-ku, Tokyo 113-8654 (JP)**

(72) Inventors:
• **TAKEO, Yoko**
**Tokyo 113-8654 (JP)**
• **MIMURA, Hidekazu**
**Tokyo 113-8654 (JP)**

(74) Representative: **Vossius & Partner**
**Patentanwälte Rechtsanwälte mbB**
**Siebertstraße 3**
**81675 München (DE)**

(54) **MIRROR DESIGN METHOD, AND ASTIGMATISM CONTROL MIRROR HAVING REFLECTION SURFACE ON WHICH DESIGN EQUATION IN SAID METHOD IS ESTABLISHED**

(57)     There is provided a method for designing a mirror by which a single mirror can be manufactured, the single mirror enabling free conversion of astigmatism by enabling a light source position and a light collection position to be set independently in a vertical direction and a horizontal direction, enabling a light collection size to be further reduced to cope with a beam in an X-ray region, and being suitably used as an optical system that has a wide application range with a simple design formula and handles a beam having different characteristics between the vertical direction and the horizontal direction. When any point on a reflecting surface is represented by M, coordinates of an intersection point between a sagittal light source ray and an incoming light ray to the M point and an intersection point between a meridional light source ray and the incoming light ray to the M point are expressed by using $L_{1s}$ and $L_{1m}$, and coordinates of an intersection point between an outgoing light ray from the M point and a sagittal collected light ray and an intersection point between the outgoing light ray from the M point and a meridional collected light ray are expressed by using $L_{2s}$ and $L_{2m}$. A mirror is designed using design formulas of a reflecting surface derived based on the coordinates and a condition that an optical path length from a light source position to a light collection position is constant with respect to any point on the reflecting surface for both the light collection in the sagittal direction and the light collection in the meridional direction.

FIG. 1

COORDINATE SYSTEM BASED ON MIRROR

**Description**

TECHNICAL FIELD

The present invention relates to a method for designing a mirror manufactured by forming a reflecting surface on a plate surface and an astigmatism control mirror having a reflecting surface satisfying a design formula provided in the method for designing a mirror.

BACKGROUND ART

A soft X-ray beam of emitted light is characterized in that characteristics thereof are different between a vertical direction and a horizontal direction. A beam size tends to be smaller in the vertical direction than in the horizontal direction. A coherent width is larger in the vertical direction than in the horizontal direction. Moreover, in a spectroscopic system using a diffraction grating which is widely used for a soft X-ray beamline, a divergence angle of a beam in the vertical direction increases. In addition, since a spectroscope including the diffraction grating to be used collects soft X-rays only in a spectral direction, "astigmatism" occurs in which light source positions are different between the spectral direction and a direction in which the soft X-rays are not collected.

As a method of an optical system that handles such beams having different characteristics in the vertical direction and the horizontal direction, for example, a method of using a two-stage light collection optical system including two mirrors arranged to handle each of the vertical direction and the horizontal direction, setting light source points independently in the vertical direction and the horizontal direction, and matching light collection points has been conventionally used. Specifically, a method of arranging two elliptical cylinder mirrors vertically and horizontally, a method of establishing an approximate shape by arranging two bent mirrors (mechanically bent cylinder mirrors), a method of arranging two mirrors of a bent mirror and a sagittal cylinder mirror to face each other in the horizontal direction, and the like are known. However, the case of the method of combining two mirrors as described above results in a complicated mechanism and an increase in size of a chamber, and thus costs increase, and adjustment becomes difficult.

A toroidal mirror has a possibility of eliminating astigmatism with a single mirror (Non Patent Literature 1). However, a toroidal mirror is a mirror that is easily manufactured by approximating an existing spheroidal mirror and setting a uniform radius of curvature in each of a longitudinal direction and a transverse direction of a reflecting surface, and has a disadvantage in that a light collection size increases in principle even if astigmatism can be eliminated.

An astigmatic off-axis mirror (AO mirror) has also been proposed as a mirror capable of making a light collection size smaller than that of the toroidal mirror and capable of setting light source and light collection points independently in the vertical and horizontal directions (Non Patent Literature 2). This mirror has a shape in which different conic curves are set in a longitudinal direction and a transverse direction and a curved surface smoothly connecting the conic curves is obtained on the basis of: a principle that an elliptic curve is applied as a ridgeline of the reflecting surface to collect beams diverging from one point, at another point; a parabola is applied as a ridgeline of the reflecting surface to collimate beams diverging from one point; and a hyperbola is applied as a ridgeline of the reflecting surface to convert beams collected toward one point into beams collected toward another point.

However, this AO mirror is a mirror defined by rotating a conic curve profile in the longitudinal direction around a straight line (long axis) connecting focal points of conic curves in the transverse direction in order to obtain a curved surface. Since the reflecting surface approximates an axisymmetric shape, there is a limit in reducing a light collection size due to the approximation. No problem arises as long as a beam is a beam in a terahertz region with a long wavelength, but the AO mirror cannot cope with a beam in an X-ray region. In addition, a design formula includes coordinate transformation several times, which is very complicated, and parameters are also complicated and difficult to understand and use.

CITATIONS LIST

NON PATENT LITERATURE

Non Patent Literature 1: William A. Rense, T. Violett, "Method of Increasing the Speed of a Grazing-Incidence Spectrograph", JOURNAL OF THE OPTICAL SOCIETY OF AMERICA, Vol. 49, No. 2, February 1959, p.139 to p.141

Non Patent Literature 2: A. Wagner-Gentner, U. U. Graf, M. Philipp, D. Rabanus, "A simple method to design astigmatic off-axis mirrors" Infrared Physics & Technology 50, 2007, p.42 to p.46

SUMMARY OF INVENTION

TECHNICAL PROBLEMS

In this respect, in view of the above-described situation, an object of the present invention is to provide a method for designing a mirror, by which a single mirror can be manufactured, the single mirror: enabling free conversion of astigmatism by enabling a light source position and a light collection position to be set independently in a vertical direction and a horizontal direction; enabling a light collection size to be further reduced to cope with a beam in an X-ray region; and being suitably used as an optical system that has a wide application range with a simple design formula and handles a beam having different characteristics between the vertical direction and the horizontal direction.

SOLUTIONS TO PROBLEMS

As a result of intensive studies in view of such a current situation, the present inventors have completed the present invention by finding that, as a method for geometrically and optically expressing properties of a beam having astigmatism, it is possible to provide a method for designing a mirror which can solve the problem described above by: newly defining a "light source ray" and a "collected light ray" for each of light collection in a sagittal direction and light collection in a meridional direction; assuming that all incoming light rays passing through a reflecting surface of the mirror pass through each of "light source rays" in a vertical direction and a horizontal direction and all outgoing light rays emitted from the reflecting surface of the mirror pass through "collected light rays" in the vertical direction and the horizontal direction; and applying Fermat's principle in which an "optical path length" from a light source position to a light collection position is constant.

That is, the present invention includes the following inventions.

(1) A method for designing a mirror manufactured by forming a reflecting surface on a plate surface, the method including: defining an optical axis of an incoming beam to the mirror as a $z_1$ axis, and defining a cross section orthogonal to the $z_1$ axis as an $x_1y_1$ plane; defining an optical axis of an outgoing beam from the mirror as a $z_2$ axis, and defining a cross section orthogonal to the $z_2$ axis as an $x_2y_2$ plane; setting the $x_1$ axis and the $x_2$ axis to be parallel to a sagittal direction of the reflecting surface; causing incoming beams to have a light source for light collection in the sagittal direction at a position displaced by $L_{1s}$ in a $z_1$-axis direction from an intersection point $M_0$ on the $z_1$ axis on the reflecting surface between the $z_1$ axis and the $z_2$ axis, and a light source for light collection in a meridional direction at a position displaced by $L_{1m}$ in the $z_1$-axis direction from the intersection point $M_0$ on the $z_1$ axis; causing outgoing beams to be collected at a position displaced by $L_{2s}$ in a $z_2$-axis direction from the intersection point $M_0$ on the $z_2$ axis for light collection in a sagittal direction and to be collected at a position displaced by $L_{2m}$ in the $z_2$-axis direction from the intersection point $M_0$ on the $z_2$ axis for light collection in a meridional direction; causing all incoming light rays passing through the mirror to pass through both a sagittal light source ray and a meridional light source ray, the sagittal light source ray passing through a position of the light source in the light collection in the sagittal direction and extending in a direction orthogonal to both the $x_1$ axis and the $z_1$ axis, the meridional light source ray passing through a position of the light source in light collection in the meridional direction and extending in a direction orthogonal to both the $y_1$ axis and the $z_1$ axis; causing all outgoing light rays emitted from the mirror to pass through both a sagittal collected light ray and a meridional collected light ray, the sagittal collected light ray passing through a collecting position in the light collection in the sagittal direction and extending in a direction orthogonal to both the $x_2$ axis and the $z_2$ axis, the meridional collected light ray passing through a collecting position in the light collection in the meridional direction and extending in a direction orthogonal to both the $y_2$ axis and the $z_2$ axis; representing any point on the reflecting surface of the mirror by M, expressing coordinates of an intersection point between the sagittal light source ray and an incoming light ray to the M point and an intersection point between the meridional light source ray and the incoming light ray to the M point by using the $L_{1s}$ and the $L_{1m}$, and expressing coordinates of an intersection point between an outgoing light ray from the M point and the sagittal collected light ray and an intersection point between the outgoing light ray from the M point and the meridional collected light ray by using the $L_{2s}$ and the $L_{2m}$; and designing the mirror by using design formulas of the reflecting surface derived based on the coordinates and a condition that an optical path length from a light source position to a light collection position is constant with respect to any point on the reflecting surface for both the light collection in the sagittal direction and the light collection in the meridional direction.

(2) The method for designing a mirror according to (1), in which the sagittal light source ray and the meridional light source ray are defined as a straight line $S_s$ extending in a $y_1$-axis direction and a straight line $S_m$ extending in an $x_1$-axis direction, respectively. The sagittal collected light ray and the meridional collected light ray are defined as a straight line $F_s$ extending in a $y_2$-axis direction and a straight line $F_m$ extending in an $x_2$-axis direction, respectively. An incoming length from the light source position to the M point with respect to the light collection in the sagittal direction is obtained as a distance to the M point from an intersection point on a side close to the meridional light source ray $S_m$ of two intersection points between the incoming light ray and an equiphase plane $A_{1s}$, the equiphase plane $A_{1s}$ being a rotated arcuate plane obtained by rotating, around the sagittal light source ray $S_s$, an arc that is formed around an intersection point $P_{m0}$ between the meridional light source ray $S_m$ and the $z_1$ axis and extends in a direction orthogonal to the $x_1$ axis through an intersection point $P_{s0}$ between the sagittal light source ray $S_s$ and the $z_1$ axis. An outgoing length from the M point to the light collection position with respect to the light collection in the sagittal direction is obtained as a distance to the M point from an intersection point on a side close to the meridional collected light ray $F_m$ of two intersection points between the outgoing light ray and an equiphase plane $A_{2s}$, the equiphase plane $A_{2s}$ being a rotated arcuate plane obtained by rotating, around the sagittal collected light ray $F_s$, an arc that is formed around an intersection point $Q_{m0}$ between the meridional collected light ray $F_m$ and the $z_2$ axis and extends in a direction orthogonal to the $x_2$ axis through an intersection point $Q_{s0}$ between the sagittal collected light ray $F_s$ and the $z_2$ axis. An incoming length from the light source position to the M point with respect to the light collection in the meridional direction is obtained as a distance to the M point from an intersection point on a side close to the sagittal light source ray $S_s$ of two intersection points between the incoming light ray and an equiphase plane $A_{1m}$, the equiphase plane $A_{1m}$ being a rotated arcuate plane obtained by rotating, around the meridional light source ray $S_m$, an arc that is formed around the intersection point $P_{s0}$ between the sagittal light source ray $S_s$ and the $z_1$ axis and extends in a direction orthogonal to the $y_1$ axis through the intersection point $P_{m0}$ between the meridional light source ray $S_m$ and the $z_1$ axis. An outgoing length from the M point to the light collection position with respect to the light collection in the meridional direction is obtained as a distance to the M point from an intersection point on a side close to the sagittal collected light ray $F_s$ of two intersection points between the outgoing light ray and an equiphase plane $A_{2m}$, the equiphase plane $A_{2m}$ being a rotated arcuate plane obtained by rotating, around the meridional collected light ray $F_m$, an arc that is formed around the intersection point $Q_{s0}$ between the sagittal collected light ray $F_s$ and the $z_2$ axis and extends in a direction orthogonal to the $y_2$ axis through the intersection point $Q_{m0}$ between the meridional collected light ray $F_m$ and the $z_2$ axis. The optical path length is calculated for the light collection in the sagittal direction and the light collection in the meridional direction.

(3) The method for designing a mirror according to (2), in which the distance to the M point from the intersection point on the side close to the meridional light source ray $S_m$ of the two intersection points between the incoming light ray and the equiphase plane $A_{1s}$ is obtained by obtaining a distance to the M point from an intersection point $P_s$ between the incoming light ray and the sagittal light source ray $S_s$ and adding or subtracting, to or from the distance, a distance from the intersection point $P_s$ to the arc defining the equiphase plane $A_{1s}$. The distance to the M point from the intersection point on the de close to the meridional collected light ray $F_m$ of the two intersection points between the outgoing light ray and the equiphase plane $A_{2s}$ is obtained by obtaining a distance to the M point from an intersection point $Q_s$ between the outgoing light ray and the sagittal collected light ray $F_s$ and adding or subtracting, to or from the distance, a distance from the intersection point $Q_s$ to the arc defining the equiphase plane $A_{2s}$. The distance to the M point from the intersection point on the side close to the sagittal light source ray $S_s$ of the two intersection points between the incoming light ray and the equiphase plane $A_{1m}$ is obtained by obtaining a distance to the M point from an intersection point $P_m$ between the incoming light ray and the meridional light source ray $S_m$ and adding or subtracting, to or from the distance, a distance from the intersection point $P_m$ to the arc defining the equiphase plane $A_{1m}$. The distance to the M point from the intersection point on the side close to the sagittal collected light ray $F_s$ of the two intersection points between the outgoing light ray and the equiphase plane $A_{2m}$ is obtained by obtaining a distance to the M point from an intersection point $Q_m$ between the outgoing light ray and the meridional collected light ray $F_m$ and adding or subtracting, to or from the distance, a distance from the intersection point $Q_m$ to the arc defining the equiphase plane $A_{2m}$.

(4) The method for designing a mirror according to any one of (1) to (3), in which a plane that includes an intersection point $M_0$ on the reflecting surface between the $z_1$ axis and the $z_2$ axis and is in contact with the reflecting surface is defined as a uv plane. A direction of a normal line passing through the $M_0$ in the uv plane is defined as a w axis. A v axis is a direction orthogonal to both the $z_1$ axis and the $z_2$ axis, and a u axis is a direction orthogonal to both the v axis and the w axis. An orthogonal coordinate system is defined based on a mirror, in which the intersection point $M_0$ is set as an origin, and an oblique incoming angle formed by a uv plane and an optical axis $z_1$ is represented by $\theta_0$. The coordinates are transformed into an $x_1y_1z_1$ coordinate system based on an optical axis of the incoming beam and into an $x_2y_2z_2$ coordinate system based on an optical axis of the outgoing beam, respectively. A design formula is expressed by a uvw coordinate system.

(5) The method for designing a mirror according to (4), in which the design formula is obtained from a following formula (1) obtained by weighting both a first formula $f_s(u, v, w) = 0$ derived from a condition that an optical path length from a light source point to a light collection point is constant for the light collection in the sagittal direction, and a second formula $f_m(u, v, w) = 0$ derived from a condition that an optical path length from the light source point to the light collection point is constant for the light collection in the meridional direction.
[Math. 1]

$$f(u, v, w) = \alpha f_s(u, v, w) + \beta f_m(u, v, w) = 0 \tag{1}$$
$$0 \leqq \alpha \leqq 1, \ \beta = 1 - \alpha$$

(6) An astigmatism control mirror having a reflecting surface satisfying the design formula according to any one of (1) to (5), in which values of the $L_{1s}$ and the $L_{1m}$ are different from each other, and values of the $L_{2s}$ and the $L_{2m}$ are equal to each other. Outgoing beams which are collected at one point are obtained from an incoming beam having astigmatism.

(7) An astigmatism control mirror having a reflecting surface satisfying the design formula according to any one of (1) to (5), values of the $L_{1s}$ and the $L_{1m}$ are equal to each other, and values of the $L_{2s}$ and the $L_{2m}$ are different from each other. An outgoing beam having astigmatism is obtained from an incoming beam diverging from one point.

(8) An astigmatism control mirror having a reflecting surface satisfying the design formula according to any one of (1) to (5), in which values of the $L_{1m}$ and the $L_{2m}$ are positive or negative infinity, and each of the $L_{1s}$ and the $L_{2s}$ has a predetermined value (where $L_{1s} + L_{2s} \neq 0$). The astigmatism control mirror has light collection performance only in the sagittal direction.

ADVANTAGEOUS EFFECTS OF INVENTION

According to a method for designing a mirror of the present invention, a light source position and a light collection position can be independently set in the vertical direction and the horizontal direction, and thereby a single mirror enabling free conversion of astigmatism can be manufactured. In addition, it is possible to cope with a beam in an X-ray region by further reducing a light collection size. Moreover, it is possible to manufacture the mirror that can be suitably used as an optical system which has a wide application range with a simple design formula and handles a beam having different characteristics between the vertical direction and the horizontal direction.

BRIEF DESCRIPTION OF DRAWINGS

FIG. 1 is a conceptual diagram of a mirror designed by a designing method according to the present invention.

FIG. 2 is a conceptual diagram illustrating a coordinate system based on an incoming beam.

FIG. 3 is a conceptual diagram illustrating a coordinate system based on an outgoing beam.

FIG. 4 is a conceptual diagram illustrating an equiphase plane $A_{1s}$ in the vicinity of an intersection point $P_s$ on a sagittal light source ray $S_s$.

FIG. 5 is a conceptual diagram illustrating an equiphase plane $A_{1m}$ in the vicinity of an intersection point $P_m$ on a meridional light source ray $S_m$.

FIG. 6 is a schematic diagram illustrating an optical system arrangement of a mirror of Example 1.

FIGS. 7(a) to 7(c) illustrate calculated shapes of a mirror reflecting surface of Example 1, FIG. 7(a) illustrates a distribution of a height $w(u, v)$ with respect to a mirror origin when a horizontal axis is set to a u coordinate and a vertical axis is set to a v coordinate, FIG. 7(b) illustrates a transverse cross-sectional profile taken along a one-dot chain line in FIG. 7(a), and FIG. 7(c) illustrates a longitudinal cross-sectional profile taken along a broken line in FIG. 7(a).

FIGS. 8(a) and 8(b) illustrate a simulation result of collection performance of Example 1, FIG. 8(a) illustrates a result of calculating variations of light rays on a light collecting surface on the basis of geometric optics, and FIG. 8(b) illustrates an intensity distribution on the light collecting surface calculated on the basis of wave optics by assuming a soft X-ray of 300 eV

FIG. 9 is a schematic diagram illustrating an optical system arrangement of a mirror of Example 2.

FIGS. 10(a) to 10(c) illustrate calculated shapes of a mirror reflecting surface of Example 2, FIG. 10(a) illustrates a distribution of a height $w(u, v)$ with respect to a mirror origin when a horizontal axis is set to a u coordinate and a vertical axis is set to a v coordinate, FIG. 10(b) illustrates a transverse cross-sectional profile taken along a one-dot chain line in FIG. 10(a), and FIG. 10(c) illustrates a longitudinal cross-sectional profile taken along a broken line in FIG. 10(a).

FIGS. 11(a) and 11(b) illustrate a simulation result of light collection performance of Example 2, FIG. 11(a) illustrates a result of calculating variations of light rays on a light collecting surface on the basis of geometric optics, and FIG. 11(b) illustrates an intensity distribution on the light collecting surface, which is calculated on the basis of wave optics by assuming a soft X-ray of 300 eV

FIG. 12 is a schematic diagram illustrating an optical system arrangement of a mirror of Example 3.

FIGS. 13(a) to 13(c) illustrate calculated shapes of a mirror reflecting surface of Example 3, FIG. 13(a) illustrates a distribution of a height w(u, v) with respect to a mirror origin when a horizontal axis is set to a u coordinate and a vertical axis is set to a v coordinate, FIG. 13(b) illustrates a transverse cross-sectional profile taken along a one-dot chain line in FIG. 13(a), and FIG. 13(c) illustrates a longitudinal cross-sectional profile taken along a broken line in FIG. 13(a).

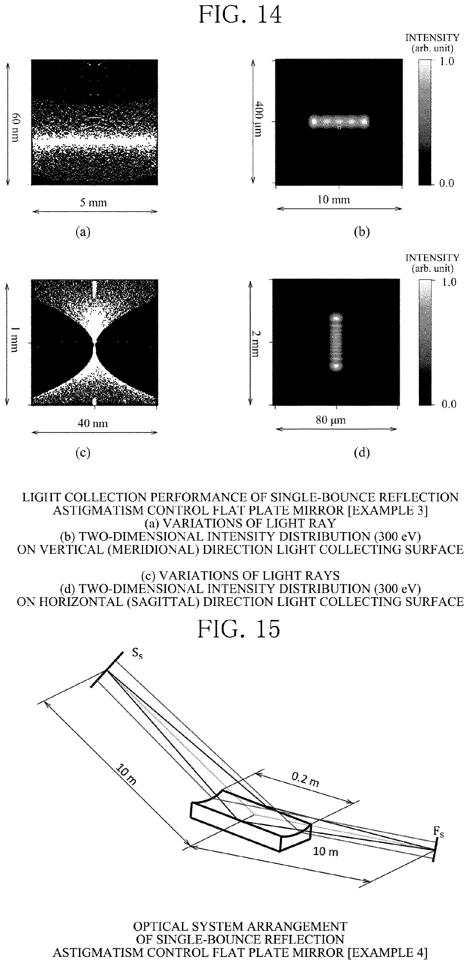

FIGS. 14(a) to 14(d) illustrate a simulation result of light collection performance of Example 3, FIG. 14(a) illustrates a result of calculating variations of light rays on a light collecting surface on the basis of geometric optics, regarding vertical (meridional) light collecting surface, FIG. 14(b) illustrates an intensity distribution on the light collecting surface, which is calculated by assuming a soft X-ray of 300 eV, regarding the same light collecting surface, FIG. 14(c) illustrates a result of calculating variations of light rays on a light collecting surface on the basis of geometric optics, regarding a horizontal (sagittal) light collecting surface, and FIG. 14(d) illustrates an intensity distribution on the light collecting surface, which is calculated by assuming a soft X-ray of 300 eV, regarding the same light collecting surface.

FIG. 15 is a schematic diagram illustrating an optical system arrangement of a mirror of Example 4.

FIGS. 16(a) to 16(c) illustrate calculated shapes of a mirror reflecting surface of Example 4, FIG. 16(a) illustrates a distribution of a height w(u, v) with respect to a mirror origin when a horizontal axis is set to a u coordinate and a vertical axis is set to a v coordinate, FIG. 16(b) illustrates a transverse cross-sectional profile taken along a one-dot chain line in FIG. 16(a), and FIG. 16(c) illustrates a longitudinal cross-sectional profile taken along a broken line in FIG. 16(a).

FIG. 17 is a diagram illustrating a difference from a truncated cone having a mirror shape of Example 4.

FIGS. 18(a) and 18(b) illustrate a simulation result of light collection performance in a sagittal direction of Example 4, FIG. 18(a) illustrates a result of calculating variations of light rays on a light collecting surface on the basis of geometric optics, and FIG. 18(b) illustrates an intensity distribution on the light collecting surface, which is calculated on the basis of wave optics by assuming a soft X-ray of 300 eV

FIGS. 19(a) to 19(c) are diagrams illustrating height distributions of reflecting surfaces of mirrors of Example 1 and Comparative Examples 1 and 2.

FIG. 20 is a diagram illustrating a result obtained by subtracting the height distribution of the mirror of Example 1 from the height distribution of the mirror of Comparative Example 2.

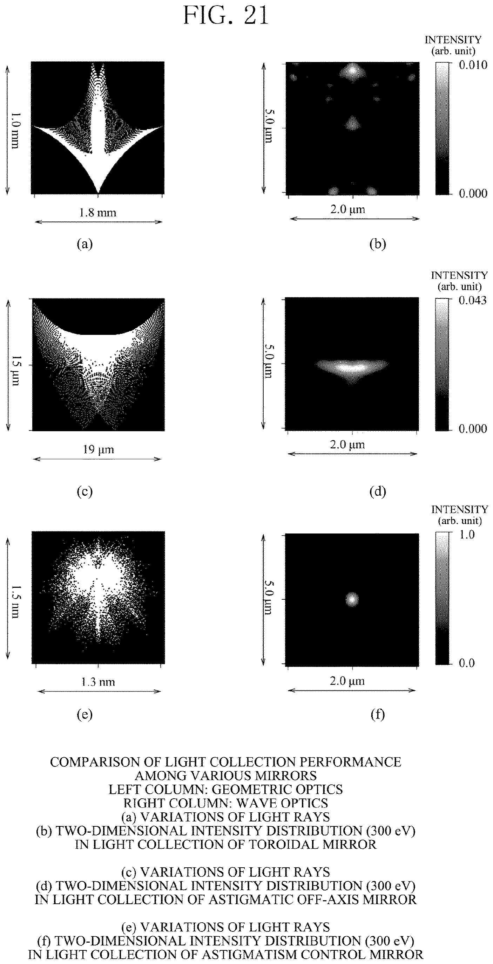

FIGS. 21(a) to 21(f) illustrate simulation results of light collection performance, FIG. 21(a) illustrates variations of light rays of Comparative Example 1 (toroidal mirror), FIG. 21(b) illustrates a two-dimensional intensity distribution at 300 eV calculated based on wave optics of Comparative Example 1, FIG. 21(c) illustrates variations of light rays of Comparative Example 2 (astigmatic off-axis mirror), FIG. 21(d) illustrates a two-dimensional intensity distribution at 300 eV calculated based on wave optics of Comparative Example 2, FIG. 21(e) illustrates variations of light rays of Example 1 (astigmatism control mirror according to the present invention), and FIG. 21(f) illustrates a two-dimensional intensity distribution at 300 eV calculated based on wave optics of Example 1.

DESCRIPTION OF EMBODIMENTS

A method for designing a mirror of the present invention is a method for designing a mirror manufactured by forming a reflecting surface on a plate surface. Hereinafter, the method for designing a mirror according to the present invention will be described with reference to representative embodiments.

An object of the present invention is to freely convert astigmatism, and a mirror is designed with higher accuracy based on Fermat's principle that "light passes through a path with the shortest optical distance". When limited to a collecting (or diffusing) mirror, Fermat's principle can be converted into an expression that "a sum of a distance from a light source point and a distance to a light collection point is constant for any point on a mirror surface (reflecting surface)". When an incoming beam or an outgoing beam has astigmatism, a law of a constant optical path length cannot be applied directly. This is because a beam having astigmatism does not have a single light source point or light collection point as the name indicates. In the present invention, a design method is realized by conceiving that a "light source ray" and a "collected light ray" are newly defined and properties of a beam having astigmatism can be geometrically and optically expressed.

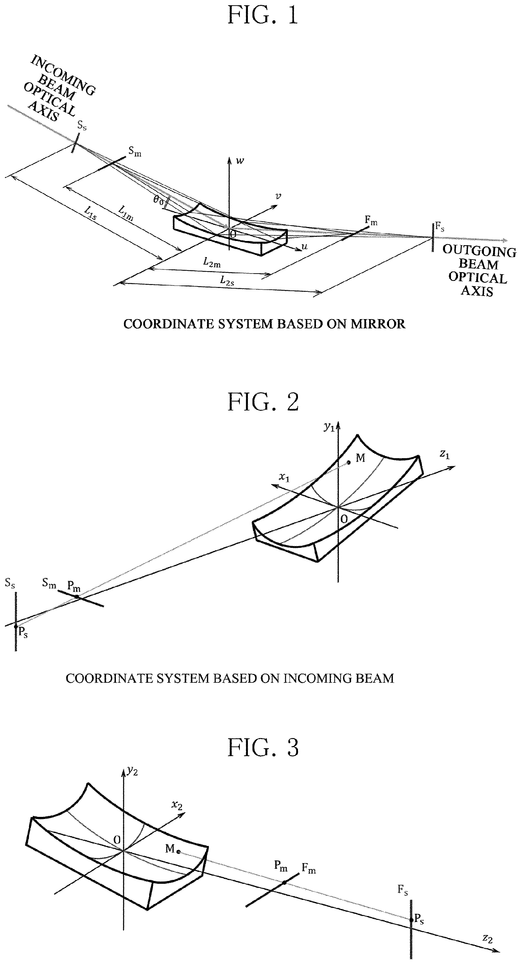

FIG. 1 is a conceptual diagram illustrating a "light source ray" and a "collected light ray". Regarding light collection in a sagittal direction, it is assumed that the incoming beam has a light source at a position displaced by $L_{1s}$ from an intersection point $M_0$ that is an intersection point on a reflecting surface between a $z_1$ axis and a $z_2$ axis on an optical axis $z_1$ of incoming light, and an outgoing beam is collected at a position displaced by $L_{2s}$ along an optical axis from the intersection point $M_0$ on an optical axis $z_2$ of outgoing light. In addition, regarding light collection in a meridional direction, it is assumed that the incoming beam has a light source at a position displaced by $L_{1m}$ from an intersection point $M_0$ that is an intersection point on the optical axis $z_1$ of the incoming light, and an outgoing beam is collected at a position displaced by $L_{2m}$ from the intersection point $M_0$ on the optical axis $z_2$ of the outgoing light.

All of incoming light rays passing through the mirror are considered to pass through both a sagittal light source

ray ($S_s$) that passes through the position of the light source in the light collection in the sagittal direction and extends in a direction ($y_1$-axis direction to be described below) orthogonal to both the optical axis $z_1$ of the incoming light and the sagittal direction, and a meridional light source ray ($S_m$) that passes through the position of the light source in the light collection in the meridional direction and extends in the sagittal direction ($x_1$-axis direction to be described below). In this manner, the sagittal light source ray ($S_s$) and the meridional light source ray ($S_m$) are defined.

All of outgoing light rays emitted from the mirror are considered to pass through both a sagittal collected light ray ($F_s$) that passes through a collecting position in the light collection in the sagittal direction and extends in a direction ($y_2$-axis direction to be described below) orthogonal to both the optical axis $z_2$ of the outgoing light and the sagittal direction, and a meridional collected light ray ($F_m$) that passes through a collecting position in the light collection in the meridional direction and extends in the sagittal direction ($x_2$-axis direction to be described below). In this manner, the sagittal collected light ray ($F_s$) and the meridional collected light ray ($F_m$) are defined.

In the present example, the sagittal light source ray ($S_s$), the meridional light source ray ($S_m$), the sagittal collected light ray ($F_s$), and the meridional collected light ray ($F_m$) are all straight lines, but may be curved lines. In addition, FIG. 1 illustrates a case where $L_{1s} > L_{1m} > 0$ and $L_{2s} > L_{2m} > 0$, but these constants may take negative values. When $L_{1s}$ or $L_{1m}$ takes a negative value, the incoming beams are reflected by the reflecting surface of the mirror on the way of collecting toward downstream. When $L_{2s}$ or $L_{2m}$ takes a negative value, the outgoing beams have a wavefront that diverges from a position located upstream from the mirror.

By defining the "light source ray" and the "collected light ray" as described above, an incoming light ray and an outgoing light ray passing through any point on the reflecting surface of the mirror can be defined. Specifically, any point on the reflecting surface of the mirror is represented by M, coordinates of an intersection point ($P_s$) between the sagittal light source ray ($S_s$) and an incoming light ray to the M point and an intersection point ($P_m$) between the meridional light source ray ($S_m$) and the incoming light ray to the M point can be expressed by a formula using the displacements $L_{1s}$ and $L_{1m}$. Similarly, coordinates of an intersection point ($Q_s$) between an outgoing light ray from the M point and the sagittal collected light ray ($F_s$) and an intersection point ($Q_m$) between the outgoing light ray from the M point and the meridional collected light ray ($F_m$) can be expressed by a formula using the displacements $L_{2s}$ and $L_{2m}$.

The design formula of the reflecting surface can be derived based on the respective coordinates of $P_s$, $P_m$, $Q_s$, and $Q_m$, and a condition that an optical path length (a sum of an incoming length and an outgoing length) from the light source position to the light collection position is constant with respect to any point on the reflecting surface in the light collection in the sagittal direction and the light collection in the meridional direction.

Any point M on the reflecting surface of the mirror can be represented by M(u, v, w) by defining a uvw orthogonal coordinate system on the basis of the mirror. Specifically, a plane that includes the intersection point $M_0$ on the reflecting surface of the incoming light and the outgoing light and is in contact with the reflecting surface is defined as a uv plane, a direction of a normal line passing through $M_0$ of the uv plane is defined as a w axis, a v axis is defined as a direction orthogonal to both the incoming optical axis and an outgoing optical axis, a u axis is defined as a direction orthogonal to both the v axis and the w axis, the intersection point $M_0$ is defined as an origin, and an oblique incoming angle formed by the uv plane and the optical axis $z_1$ is represented by $\theta_0$.

However, in FIG. 1, it should be noted that the sagittal light source ray ($S_s$) and the meridional light source ray ($S_m$) are not orthogonal to the u axis but are orthogonal to the optical axis $z_1$ of the incoming beam. Similarly, the sagittal collected light ray ($F_s$) and the meridional collected light ray ($F_m$) are orthogonal to the optical axis $z_2$ of the outgoing beam. Although it is also possible to calculate an optical path length directly from the light source ray and the collected light ray which are obliquely set with respect to the uvw coordinate system, the calculation is not simple. Therefore, in the embodiment, the optical path length is calculated by converting the coordinate system into a coordinate system based on each of an incoming beam optical axis and an outgoing beam optical axis, and an obtained resultant is substituted in the design formula of the astigmatism control mirror.

The conversion into the coordinate system based on the incoming beam optical axis is as follows. FIG. 2 illustrates a schematic diagram of a converted coordinate system. An optical axis of the incoming beam is defined as the $z_1$ axis, and a cross section orthogonal to the $z_1$ axis is defined as an $x_1y_1$ plane. Each coordinate of each point M($x_1$, $y_1$, $z_1$) on the mirror is given by Formula (2).
[Math. 2]

$$(x_1, y_1, z_1) = (v, u\sin\theta_0 + w\cos\theta_0, u\cos\theta_0 - w\sin\theta_0) \qquad (2)$$

A coordinate of the intersection point $P_s$ between the incoming light ray passing through the point M and the sagittal light source ray $S_s$ and a coordinate of the intersection point $P_m$ between the same incoming light ray and the meridional light source ray $S_m$ can be expressed respectively by the following formulas (3) and (4) using displacements $L_{1s}$ and $L_{1m}$, on the $x_1y_1z_1$ coordinate system.
[Math. 3]

$$\mathrm{P_s} = \left(0, (L_{1m} - L_{1s})\frac{y_1}{z_1 + L_{1m}}, -L_{1s}\right) \tag{3}$$

$$\mathrm{P_m} = \left((L_{1s} - L_{1m})\frac{x_1}{z_1 + L_{1s}}, 0, -L_{1m}\right) \tag{4}$$

Similarly, the conversion into the coordinate system based on the outgoing beam optical axis is as follows. FIG. 3 illustrates a schematic diagram of a converted coordinate system. An optical axis of an outgoing beam is defined as the $z_2$ axis, and a cross section orthogonal to the $z_2$ axis is defined as an $x_2 y_2$ plane. Each coordinate of each point $M(x_2, y_2, z_2)$ on the mirror is given by Formula (5).
[Math. 4]

$$(x_2, y_2, z_2) = (v, -u \sin\theta_0 + w \cos\theta_0, u \cos\theta_0 + w \sin\theta_0) \tag{5}$$

A coordinate of the intersection point $Q_s$ between the outgoing light ray passing through the point M and the sagittal collected light ray $F_s$ and a coordinate of the intersection point $Q_m$ between the outgoing light ray and the meridional collected light ray $F_m$ can be expressed respectively by the following formulas (6) and (7) using the displacements $L_{2s}$ and $L_{2m}$, on the $x_2 y_2 z_2$ coordinate system.
[Math. 5]

$$\mathrm{Q_s} = \left(0, (L_{2m} - L_{2s})\frac{y_2}{L_{2m} - z_2}, L_{2s}\right) \tag{6}$$

$$\mathrm{Q_m} = \left((L_{2s} - L_{2m})\frac{x_2}{L_{2s} - z_2}, 0, L_{2m}\right) \tag{7}$$

As described above, design formulas of the reflecting surface are derived based on the respective coordinates of $P_s$, $P_m$, $Q_s$, and $Q_m$, and a condition that an optical path length (a sum of an incoming length and an outgoing length) from the light source position to the light collection position is constant with respect to any point on the reflecting surface in the light collection in the sagittal direction and the light collection in the meridional direction.
In the embodiment, the distance between each of the intersection points $P_s$, $P_m$, $Q_s$, and $Q_m$ on the light source ray and the collected light ray described above and any point M on the reflecting surface is not set as an incoming length or an outgoing length as it is, but is calculated by performing the following compensation for an optical path length so as to obtain a more accurate design formula while using the coordinates of the intersection points on the light source ray and the collected light ray defined as a straight line.

(Optical path length compensation)

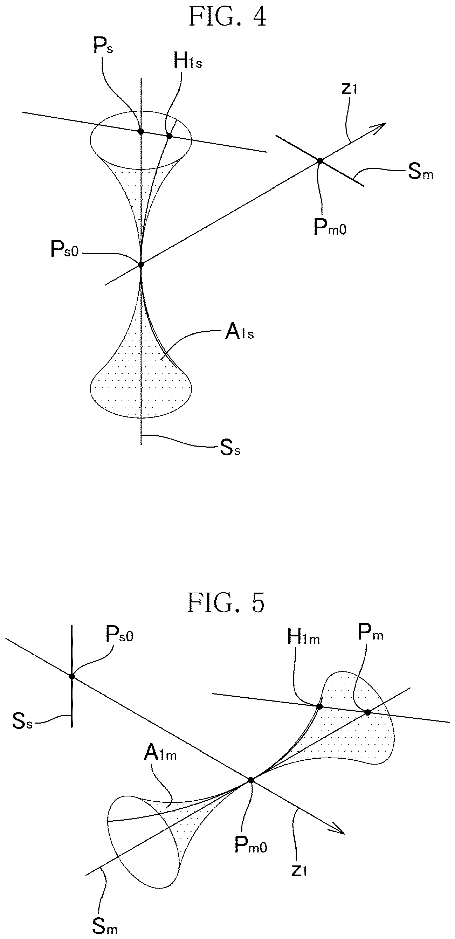

Fermat's principle in a case where a normal light source point and a light collection point can be defined is considered. An equiphase plane in the vicinity of the light source point is a spherical plane around the light source point, and an equiphase plane in the vicinity of the light collection point is a spherical plane around the light collection point. Keeping in mind that light rays are always orthogonal to an equiphase plane, the law of constant optical path length is paraphrased as the fact that an optical distance of a light ray connecting any point on a specific equiphase plane in the vicinity of a light source point and a point on a specific equiphase plane in the vicinity of a light collection point corresponding to the aforementioned any point is constant. Even in a case where an incoming beam as in the present invention has astigmatism, a more accurate design formula can be derived by performing compensation in consideration of the equiphase plane.
First, regarding the incoming side, an equiphase plane in the vicinity corresponding to the above-described intersection point $P_s$ on the sagittal light source ray $S_s$ is considered. On the sagittal light source ray $S_s$, a wavefront converging toward the meridional light source ray $S_m$ should be observed. Although it is not strictly possible to define a phase on the sagittal light source ray $S_s$ on the basis of such an assumption described above, here, an intersection point between $S_m$ and the $z_1$ axis is represented by $P_{m0}$, and it is assumed that a phase distribution corresponding to a distance from $P_{m0}$ is present on $S_s$, i.e., a beam before incoming to the mirror (reflecting surface) has a wavefront concentrated on the meridional light source ray $S_m$ in the $y_1$-axis direction. Based on this idea, as illustrated in FIG. 4, a rotated arcuate plane formed by rotating, around the sagittal light source ray $S_s$, an arc $B_{1s}$ around the intersection point $P_{m0}$ between the meridional light source ray $S_m$ and the $z_1$ axis and extends in a direction orthogonal to the $x_1$ axis through the intersection point $P_{s0}$ between the sagittal light source ray $S_s$ and the $z_1$ axis is defined as an equiphase plane $A_{1s}$. An incoming length from the light source position to the M point in the sagittal direction is more accurately obtained as a distance to the M point from an intersection point on a side close to the meridional light source ray $S_m$ of two intersection points between the incoming light ray and the equiphase plane $A_{1s}$.

Here, a distance from the intersection point between the incoming light ray and the equiphase plane $A_{1s}$ to the M point on the reflecting surface of the mirror is obtained by first obtaining a distance from the intersection point $P_s$ between the incoming light ray and the sagittal light source ray $S_s$ to the M point and adding or subtracting (subtracting in the example of the drawing), to or from a distance, the distance being from the intersection point $P_s$ to the arc $B_{1s}$ defining the equiphase plane $A_{1s}$, i.e., a distance between $P_s$ and $H_{1s}$ where $H_{1s}$ represents a foot of a perpendicular line drawn from $P_s$ to the arc $B_{1s}$. That is, an incoming length $f_{1s}$ is expressed by Formula (8). The reason why this formula is an approximate formula is that there is no guarantee that the point $H_{1s}$ is present on a straight line from $P_s$ to M. However, it is needless to say that the incoming length may be obtained by calculation other than the approximate formula. In the example, the incoming length is approximately obtained by adding/subtracting the distance between $P_s$ and $H_{1s}$ where $H_{1s}$ represents the foot of the perpendicular line drawn from $P_s$ to the arc $B_{1s}$ as described above, but the incoming length may be more accurately calculated using a distance from $P_s$ to the intersection point on the side close to the meridional light source ray $S_m$ among the two intersection points between the incoming light ray and the equiphase plane $A_{1s}$ instead of the perpendicular line drawn to the arc $B_{1s}$.

[Math. 6]

$$
\begin{aligned}
f_{1s}(u, v, w) &= \left|\overrightarrow{P_sM}\right| - \left|\overrightarrow{P_sH_{1s}}\right| \\[2mm]
&= \sqrt{x_1^2 + \left(y_1 - (L_{1m} - L_{1s})\frac{y_1}{z_1+L_{1m}}\right)^2 + (z_1 + L_{1s})^2} \; - \\[2mm]
&\quad - \left\{\sqrt{(L_{1s} - L_{1m})^2 + (L_{1m} - L_{1s})^2\left(\frac{y_1}{z_1+L_{1m}}\right)^2} - (L_{1s} - L_{1m})\right\} \\[2mm]
&= (z_1 + L_{1s})\sqrt{1 + \left(\frac{x_1}{z_1+L_{1s}}\right)^2 + \left(\frac{y_1}{z_1+L_{1m}}\right)^2} \\[2mm]
&\quad - (L_{1s} - L_{1m})\left\{\sqrt{1 + \left(\frac{y_1}{z_1+L_{1m}}\right)^2} - 1\right\}
\end{aligned}
\tag{8}
$$

By introducing $t'_{1x}$ (Formula (10)) and $t'_{1y}$ (Formula (11)) to the formula, the formula can be transformed into the following formula (9).

[Math. 7]

$$
\begin{aligned}
f_{1s}(u, v, w) &= z_1\sqrt{1 + t'^2_{1x} + t'^2_{1y}} \\[2mm]
&\quad + L_{1m}\left(\sqrt{1 + t'^2_{1y}} - 1\right) \\[2mm]
&\quad + L_{1s}\left(\sqrt{1 + t'^2_{1x} + t'^2_{1y}} - \sqrt{1 + t'^2_{1y}} + 1\right)
\end{aligned}
\tag{9}
$$

$$
t'_{1x} = \frac{x_1}{z_1+L_{1s}}
\tag{10}
$$

$$
t'_{1y} = \frac{y_1}{z_1+L_{1m}}
\tag{11}
$$

Subsequently, similarly, regarding the incoming side, an equiphase plane in the vicinity corresponding to the above-described intersection point $P_m$ on the meridional light source ray $S_m$ is considered. On the meridional light source ray $S_m$, a wavefront diverging from the sagittal light source ray $S_s$ should be observed. Although it is not strictly possible to define a phase on the $S_m$ on the basis of such an assumption described above, here, an intersection point between $S_s$ and the $z_1$ axis is represented by $P_{s0}$, and it is assumed that a phase distribution corresponding to a distance from $P_{s0}$ is present on $S_m$, i.e., a beam before incoming to the mirror (reflecting surface) has a wavefront diverging from the sagittal light source ray $S_s$ in the $x_1$-axis direction. Based on this idea, as illustrated in FIG. 5, a rotated arcuate plane formed by rotating, around the meridional light source ray $S_m$, an arc $B_{1m}$ around the intersection point $P_{s0}$ between the sagittal light source ray $S_s$ and the $z_1$ axis and extends in a direction orthogonal to the $y_1$ axis through the intersection point $P_{m0}$ between the meridional light source ray $S_m$ and the $z_1$ axis is defined as an equiphase plane $A_{1m}$. An incoming length from the light source position to the M point in the $y_1$-axis direction is obtained as a distance to the M point on the reflecting surface of the mirror from an intersection point on a side close to the sagittal light source ray $S_s$ among two intersection points between the incoming light ray and the equiphase plane $A_{1m}$.

A distance from the intersection point between the incoming light ray and the equiphase plane $A_{1m}$ to the M point is obtained by first obtaining a distance from the intersection point $P_m$ between the incoming light ray and the meridional light source ray $S_m$ to the M point and adding or subtracting (adding in the example), to or from a distance, the distance being from the intersection point $P_m$ to the arc $B_{1m}$ defining the equiphase plane $A_{1m}$, i.e., a distance between $P_m$ and $H_{1m}$ where $H_{1m}$ represents a foot of a perpendicular line drawn from $P_m$ to the arc $B_{1m}$. That is, an incoming length $f_{1m}$ is expressed by Formula (12).

[Math. 8]

$$
\begin{aligned}
f_{1m}(u,v,w) &= \left|\overrightarrow{P_m M}\right| + \left|\overrightarrow{H_{1m}P_m}\right| \\
&= \sqrt{\left(x_1 - (L_{1s} - L_{1m})\frac{x_1}{z_1 + L_{1s}}\right)^2 + y_1^2 + (z_1 + L_{1m})^2} \\
&\quad + \left\{\sqrt{(L_{1s} - L_{1m})^2 + (L_{1s} - L_{1m})^2\left(\frac{x_1}{z_1+L_{1s}}\right)^2} - (L_{1s} - L_{1m})\right\} \\
&= (z_1 + L_{1m})\sqrt{1 + \left(\frac{x_1}{z_1+L_{1s}}\right)^2 + \left(\frac{y_1}{z_1+L_{1m}}\right)^2} \\
&\quad + (L_{1s} - L_{1m})\left\{\sqrt{1 + \left(\frac{x_1}{z_1+L_{1s}}\right)^2} - 1\right\}
\end{aligned} \tag{12}
$$

By introducing $t'_{1x}$ and $t'_{1y}$ to the formula, the formula can be transformed into the following formula (13).

[Math. 9]

$$
\begin{aligned}
f_{1m}(u,v,w) &= z_1\sqrt{1 + {t'_{1x}}^2 + {t'_{1y}}^2} \\
&\quad + L_{1m}\left(\sqrt{1 + {t'_{1x}}^2 + {t'_{1y}}^2} - \sqrt{1 + {t'_{1x}}^2} + 1\right) \\
&\quad + L_{1s}\left(\sqrt{1 + {t'_{1x}}^2} - 1\right)
\end{aligned} \tag{13}
$$

Regarding an outgoing side, similarly to the incoming side, an equiphase plane in the vicinity corresponding to the intersection point $Q_s$ on the sagittal collected light ray $F_s$ and an equiphase plane in the vicinity corresponding to the intersection point $Q_m$ on the meridional collected light ray $F_m$ are considered. On the sagittal collected light ray $F_s$, a wavefront diverging from the meridional collected light ray $F_m$ should be observed. Although it is not strictly possible to define a phase on $F_s$ on the basis of such an assumption, here, an intersection point between $F_m$ and the outgoing optical axis $z_2$ is represented by $Q_{m0}$, and it is assumed that a phase distribution corresponding to a distance from $Q_{m0}$ is present on $F_s$. In addition, on the meridional collected light ray $F_m$, a wavefront converging toward the sagittal collected light ray $F_s$ should be observed. Although it is not possible to strictly define a phase on $F_m$ based on such an assumption, here, an intersection point between $F_s$ and the outgoing optical axis $z_2$ is represented by $Q_{s0}$, and it is assumed that a phase distribution corresponding to the distance from $Q_{s0}$ is present on $F_m$.

Based on these ideas, a more accurate outgoing length is obtained similarly to the incoming side. Specifically, although illustration is omitted, in the same manner as described above, compensation is performed by addition or subtraction using a distance from the intersection point $Q_s$ to an arc $B_{2s}$ defining an equiphase plane, i.e., a distance between $H_{2s}$ and $Q_s$, where $H_{2s}$ represents a foot of a perpendicular line drawn from $Q_s$ to the arc $B_{2s}$, and a distance from the intersection point $Q_m$ to an arc $B_{2m}$ defining an equiphase plane, i.e., a distance between $Q_m$ and $H_{2m}$, where $H_{2m}$ represents a foot of a perpendicular line drawn from $Q_m$ to the arc $B_{2m}$, and both outgoing lengths of an outgoing length $f_{2s}$ in the light collection in the sagittal direction and an outgoing length $f_{2m}$ in the light collection in the meridional direction can be more accurately obtained as in Formulas (14) and (15).

[Math. 10]

$$
\begin{aligned}
f_{2s}(u, v, w) &= \left|\overrightarrow{MQ_s}\right| - \left|\overrightarrow{H_{2m}Q_s}\right| \\[4pt]
&= \sqrt{x_2^2 + \left((L_{2m} - L_{2s})\frac{y_2}{L_{2m}-z_2} - y_2\right)^2 + (L_{2s} - z_2)^2} \\[4pt]
&\quad - \left\{ \sqrt{(L_{2s} - L_{2m})^2 + (L_{2m} - L_{2s})^2 \left(\frac{y_2}{L_{2m}-z_2}\right)^2} - \right. \\[4pt]
&\quad \left. (L_{2s} - L_{2m}) \right\} \\[4pt]
&= (L_{2s} - z_2)\sqrt{1 + \left(\frac{x_2}{L_{2s}-z_2}\right)^2 + \left(\frac{y_2}{L_{2m}-z_2}\right)^2} \\[4pt]
&\quad -(L_{2s} - L_{2m})\left\{ \sqrt{1 + \left(\frac{y_2}{L_{2m}-z_2}\right)^2} - 1 \right\}
\end{aligned}
\tag{14}
$$

[Math. 11]

$$
\begin{aligned}
f_{2m}(u, v, w) &= \left|\overrightarrow{MQ_m}\right| + \left|\overrightarrow{Q_m H_{2m}}\right| \\[4pt]
&= \sqrt{\left((L_{2s} - L_{2m})\frac{x_2}{L_{2s}-z_2} - x_2\right)^2 + y_2^2 + (L_{2m} - z_2)^2} \\[4pt]
&\quad + \left\{ \sqrt{(L_{2s} - L_{2m})^2 + (L_{2s} - L_{2m})^2 \left(\frac{x_2}{L_{2s}-z_2}\right)^2} - (L_{2s} - L_{2m}) \right\} \\[4pt]
&= (L_{2m} - z_2)\sqrt{1 + \left(\frac{x_2}{L_{2s}-z_2}\right)^2 + \left(\frac{y_2}{L_{2m}-z_2}\right)^2} \\[4pt]
&\quad +(L_{2s} - L_{2m})\left\{ \sqrt{1 + \left(\frac{x_2}{L_{2s}-z_2}\right)^2} - 1 \right\}
\end{aligned}
\tag{15}
$$

$f_{2s}$ can be transformed as in the following formulas (16) to (18) by introducing $t'_{2x}$ and $t'_{2y}$.

[Math. 12]

$$f_{2s}(u,v,w) = -z_2\sqrt{1 + {t'_{2x}}^2 + {t'_{2y}}^2}$$

$$+L_{2m}\left(\sqrt{1 + {t'_{2y}}^2} - 1\right) \tag{16}$$

$$+L_{2s}\left(\sqrt{1 + {t'_{2x}}^2 + {t'_{2y}}^2} - \sqrt{1 + {t'_{2y}}^2} + 1\right)$$

$$t'_{2x} = \frac{x_2}{L_{2s}-z_2} \tag{17}$$

$$t'_{2y} = \frac{y_2}{L_{2m}-z_2} \tag{18}$$

$f_{2m}$ can be transformed as in the following formula (19) by introducing $t'_{2x}$ and $t'_{2y}$.
[Math. 13]

$$f_{2m}(u,v,w) = -z_2\sqrt{1 + {t'_{2x}}^2 + {t'_{2y}}^2}$$

$$+L_{2m}\left(\sqrt{1 + {t'_{2x}}^2 + {t'_{2y}}^2} - \sqrt{1 + {t'_{2x}}^2} + 1\right) \tag{19}$$

$$+L_{2s}\left(\sqrt{1 + {t'_{2x}}^2} - 1\right)$$

(Calculation of optical path length)

By using the incoming length and the outgoing length obtained in the above-described manner, the optical path length for the light collection in each of the sagittal direction and the meridional direction is calculated. When a reference optical path length from the light source point to the light collection point in the light collection in the sagittal direction is defined as $L_s = L_{1s} + L_{2s}$, a conditional formula suitable for the light collection in the sagittal direction is derived as in the following formula (20).
[Math. 14]

$$f_s(u,v,w) = f_{1s}(u,v,w) + f_{2s}(u,v,w) - L_s$$

$$= z_1\sqrt{1 + {t'_{1x}}^2 + {t'_{1y}}^2} - z_2\sqrt{1 + {t'_{2x}}^2 + {t'_{2y}}^2}$$

$$+L_{1m}\left(\sqrt{1 + {t'_{1y}}^2} - 1\right)$$

$$+L_{1s}\left(\sqrt{1 + {t'_{1x}}^2 + {t'_{1y}}^2} - \sqrt{1 + {t'_{1y}}^2}\right) \tag{20}$$

$$+L_{2m}\left(\sqrt{1 + {t'_{2y}}^2} - 1\right)$$

$$+L_{2s}\left(\sqrt{1 + {t'_{2x}}^2 + {t'_{2y}}^2} - \sqrt{1 + {t'_{2y}}^2}\right)$$

$$= 0$$

Similarly, when a reference optical path length from the light source point to the light collection point in the light collection in the meridional direction is defined as $L_m = L_{1m} + L_{2m}$, a conditional formula suitable for the light collection in the meridional direction is derived as in the following formula (21).
[Math. 15]

$$f_m(u, v, w) = f_{1m}(u, v, w) + f_{2m}(u, v, w) - L_m$$

$$= z_1 \sqrt{1 + {t'_{1x}}^2 + {t'_{1y}}^2} - z_2 \sqrt{1 + {t'_{2x}}^2 + {t'_{2y}}^2}$$

$$+ L_{1m} \left( \sqrt{1 + {t'_{1x}}^2 + {t'_{1y}}^2} - \sqrt{1 + {t'_{1x}}^2} \right)$$

$$+ L_{1s} \left( \sqrt{1 + {t'_{1x}}^2} - 1 \right) \tag{21}$$

$$+ L_{2m} \left( \sqrt{1 + {t'_{2x}}^2 + {t'_{2y}}^2} - \sqrt{1 + {t'_{2x}}^2} \right)$$

$$+ L_{2s} \left( \sqrt{1 + {t'_{2x}}^2} - 1 \right)$$

$$= 0$$

Ideally, a shape of the reflecting surface of the mirror is obtained by a set of points (u, v, w) that simultaneously satisfy a light collection condition in the sagittal direction in Formula (20) and the light collection condition in the meridional direction in Formula (21). However, if a solution to the simultaneous equations is a design formula, the shape is formed under a special condition such as "$L_{1s} = L_{1m}$ and $L_{2s} = L_{2m}$". In order to obtain a design formula representing a more generalized shape of the reflecting surface, which can be established even under other conditions, the present inventors have weighted Formulas (20) and (21) and establishes a new Formula f(u, v, w) = 0 provided in Formula (22) as the design formula.

(Design formula)

That is, the design formula is the formula f(u, v, w) = 0 obtained by weighting $F_s(u, v, w) = 0$ (formula (20)) that is a first formula (formula of a sagittal direction light collection condition) derived from a condition that the optical path length from the light source point to the light collection point in the light collection in the sagittal direction is constant, and $F_m(u, v, w) = 0$ (Formula (21)) that is a second formula (formula of a meridional direction light collection condition) derived from a condition that the optical path length from the light source point to the light collection point in the light collection in the meridional direction is constant, by using $\alpha$ and $\beta$ as the following formula (22). $\alpha$ is a weighting coefficient for the light collection in the meridional direction, and $\beta$ is a weighting coefficient for the light collection in the sagittal direction.
[Math. 16]

$$f(u, v, w)$$

$$= z_1 \sqrt{1 + t_{1x}'^2 + t_{1y}'^2} - z_2 \sqrt{1 + t_{2x}'^2 + t_{2y}'^2}$$

$$+ L_{1m}\left( \alpha\sqrt{1 + t_{1x}'^2 + t_{1y}'^2} - \alpha\sqrt{1 + t_{1x}'^2} + \beta\sqrt{1 + t_{1y}'^2} - \beta \right)$$

$$+ L_{1s}\left( \beta\sqrt{1 + t_{1x}'^2 + t_{1y}'^2} + \alpha\sqrt{1 + t_{1x}'^2} - \beta\sqrt{1 + t_{1y}'^2} - \alpha \right) \tag{22}$$

$$+ L_{2m}\left( \alpha\sqrt{1 + t_{2x}'^2 + t_{2y}'^2} - \alpha\sqrt{1 + t_{2x}'^2} + \beta\sqrt{1 + t_{2y}'^2} - \beta \right)$$

$$+ L_{2s}\left( \beta\sqrt{1 + t_{2x}'^2 + t_{2y}'^2} + \alpha\sqrt{1 + t_{2x}'^2} - \beta\sqrt{1 + t_{2y}'^2} - \alpha \right)$$

$$= 0$$

Formula (22) is a design formula of the mirror. When $t_{1x}'$, $t_{1y}'$, $t_{2x}'$, and $t_{2y}'$ in the formula are rewritten on the basis of the uvw coordinate system, the following formulas (23) to (26) are obtained.
[Math. 17]

$$t_{1x}' = \frac{v}{u\cos\theta_0 - w\sin\theta_0 + L_{1s}} \tag{23}$$

$$t_{1y}' = \frac{u\sin\theta_0 + w\cos\theta_0}{u\cos\theta_0 - w\sin\theta_0 + L_{1m}} \tag{24}$$

$$t_{2x}' = \frac{v}{L_{2s} - u\cos\theta_0 - w\sin\theta_0} \tag{25}$$

$$t_{2y}' = \frac{-u\sin\theta_0 + w\cos\theta_0}{L_{2m} - u\cos\theta_0 - w\sin\theta_0} \tag{26}$$

As can be found from Formula (22), it can be confirmed that an equation having good symmetry with respect to the light collection in the sagittal direction and the light collection in the meridional direction has been obtained. Although "$L_{1s} > L_{1m} > 0$ and $L_{2s} > L_{2m} > 0$" are assumed in the derivation described above, the same equation (design formula) provided in Formula (22) is derived even without the assumption described above, that is, even if a magnitude relationship is reversed or each set value takes a negative value. However, all of the four constants $L_{1m}$, $L_{1s}$, $L_{2m}$, and $L_{2s}$ are positive or negative values and cannot be set to 0.

(Examples of mirrors that can be designed)

In condition setting of Formula (22), the values of $L_{1s}$ and $L_{1m}$ are set to different values, and the values of $L_{2s}$ and $L_{2m}$ are set to be equal to each other (the same value), so that it is possible to design an astigmatism control mirror including a reflecting surface in which an outgoing beam collected on one point can be obtained from an incoming beam having astigmatism. Conversely, by setting the values of $L_{1s}$ and $L_{1m}$ to the same value and setting the values of $L_{2s}$ and $L_{2m}$ to different values, it is possible to design an astigmatism control mirror including a reflecting surface in which an outgoing beam having astigmatism is obtained from an incoming beam diverging from one point. In addition, by setting the values of $L_{1m}$ and $L_{2m}$ to positive or negative infinity and setting $L_{1s}$ and $L_{2s}$ to predetermined values (where $L_{1s} + L_{2s} \neq 0$), an astigmatism control mirror having collection performance only in the sagittal direction can be designed.
In addition, by using the design formula (22), it is also possible to design a mirror including a reflecting surface in which light source/light collection positions of both the light collection in the sagittal direction and the light collection in the meridional direction coincide with each other. For example, by substituting $L_{1s} = L_{1m} = L_1$ and $L_{2s} = L_{2m} = L_2$ into the design formula (22), the following formula (27) is obtained.
[Math. 18]

$$f(u, v, w)$$

$$= (L_1 + z_1)\sqrt{1 + {t'_{1x}}^2 + {t'_{1y}}^2} + (L_2 - z_2)\sqrt{1 + {t'_{2x}}^2 + {t'_{2y}}^2} - (L_1 + L_2) \tag{27}$$

$$= 0$$

A reflecting surface designed by the formula (27) has any shape of a spheroid, a hyperboloid of revolution, a paraboloid of revolution, or a flat surface depending on the positive/negative and magnitude relationship between $L_1$ and $L_2$. The classification thereof is illustrated in Table 1. It should be particularly noted that not only a concave mirror but also a convex mirror and a flat surface are designed with the same formula.

[Table 1]

Classification of Shapes Derived from Design Formulas of Astigmatism Control Flat Plate Mirror

| Conditions | Shapes |
|---|---|
| $L_2 > 0 \cap L_1 > 0$ | Concave spheroid |
| $L_2 < 0 \cap L_1 < 0$ | Convex spheroid |
| $-L_1 > L_2 > 0 \cup -L_2 > L_1 > 0$ | Concave hyperboloid of revolution |
| $L_2 > -L_1 > 0 \cup L_1 > -L_2 > 0$ | Convex hyperboloid of revolution |
| $(L_1 = \pm\infty \cap L_2 > 0) \cup (L_1 > 0 \cap L_2 = \pm\infty)$ | Concave paraboloid of revolution |
| $(L_1 = \pm\infty \cap L_2 < 0) \cup (L_1 < 0 \cap L_2 = \pm\infty)$ | Convex paraboloid of revolution |
| $-L_1 = L_2 \cup L_1 = L_2 = \pm\infty$ | Flat surface |

When the light collection action of the mirror is limited to the meridional direction, that is, when $L_{1s} = +\infty$ and $L_{2s} = +\infty$, Formula (22) is simplified to the following formula (28).
[Math. 19]

$$f(u, v, w)$$

$$= (L_{1m} + z_1)\sqrt{1 + {t'_{1y}}^2} + (L_{2m} - z_2)\sqrt{1 + {t'_{2y}}^2} - (L_{1m} + L_{2m}) \tag{28}$$

$$= 0$$

Formula (28) represents an elliptical, parabolic, hyperbolic or linear columnar body. Similarly to Formula (27), different shapes such as a concave surface, a flat surface, and a convex surface are expressed by the positive/negative or magnitude relationship between $L_{1m}$ and $L_{2m}$.
As described above, it can be found that the design formula of the astigmatism control flat mirror according to the present invention is a highly versatile (widely applicable) design formula including the existing mirror such as a spheroidal mirror, a hyperboloid mirror, a paraboloid mirror, a one-dimensional elliptical mirror (one of K-B mirrors), a one-dimensional hyperboloid mirror, a one-dimensional paraboloid mirror, and a flat mirror.
Although the embodiments of the present invention have been described above, it is needless to say that the present invention is not limited to such examples and can be implemented in various forms without departing from the gist of the present invention. In the embodiment, the light source ray and the collected light ray are each a straight line, and the distance between the straight line and the equiphase plane in the vicinity thereof is compensated, but such compensation is not necessarily required. In addition, it is also preferable to obtain an arc line or another curve as the light source ray or the collected light ray without compensation or by a compensation method other than the compensation described above, or by an approximation method. The position of the origin of the design formulae of the reflecting surface may also be set at a different position. It is needless to say that the coordinate transformation may be performed.

EXAMPLES

Next, as a design example of the astigmatism control mirror according to the present invention described above, four mirrors including two mirrors (Examples 1 and 2) intended to eliminate astigmatism, a mirror (Example 3) intended to add astigmatism, and a mirror (Example 4) intended to collect light only in the sagittal direction are designed, and a result of checking the performance of each mirror by simulation using both geometric optics and wave optics, and a result of comparing the mirror of Example 1 with a conventional mirror will be described.

(Simulation technique)

A mirror was set to reflect a beam vertically upward. Specifically, the longitudinal (meridional) direction of the mirror (reflecting surface) corresponds to vertical light collection, and the transverse (sagittal) direction thereof corresponds to horizontal light collection. In light ray tracing calculation based on geometric optics, a light ray group passing through the light source ray for each of the light collections in the meridional direction and the sagittal direction illustrated in FIGS. 1 to 3 is defined and is incident to the reflecting surface of the mirror. In this case, a thickness of the light source ray, i.e., a size of the light source is set to 0. Light rays are uniformly emitted to an entire effective range of the reflecting surface.

A normal vector n(x, y, z) at each position on the reflecting surface of the mirror can be obtained as a numerical solution that is a unit vector parallel to a gradient vector, from a gradient vector of a function f(u, v, w) defined by Formula (22) (Formula (29)). As illustrated in FIG. 1, the incoming light ray is reflected symmetrically about the normal vector of the reflecting surface of the mirror and propagates to the light collecting surface. In this way, variations of the light rays on the light collecting surface are evaluated.

[Math. 20]

$$\mathbf{n}(u, v, w) \parallel \nabla f(u, v, w) \tag{29}$$

In the diffraction integral calculation based on wave optics, lattice points are first arranged at equal intervals in a u direction and a v direction on the reflecting surface of the mirror, and then the coordinates $M(u, v, w)$ of respective points are converted into a coordinate system $M(x_1, y_1, z_1)$ based on the incoming optical axis on the basis of Formula (2). Subsequently, centers of curvature in the $x_1$ and $y_1$ directions of the wavefront of the beam incident on the reflecting surface of the mirror are matched with the light source $S_s$ of the sagittal direction light collection and the light source $S_m$ of the meridional direction light collection, respectively. A line light source having no thickness is assumed, and beams are incident on the entire effective area of the reflecting surface with uniform intensity. A wave motion field $U_M(x_1, y_1, z_1)$ at the point $M(x_1, y_1, z_1)$ on the mirror, which is expressed in the $x_1 y_1 z_1$ coordinate system, is expressed by the following formulas (30) and (31).

[Math. 21]

$$U_M(x_1, y_1, z_1) = I_0 \exp\left(\frac{2\pi j}{\lambda} r_i(x_1, y_1, z_1)\right) \tag{30}$$

$$r_i(x_1, y_1, z_1) = z_1 + (z_1 + L_{1s})\left(\sqrt{1 + \left(\frac{x_1}{z_1 + L_{1s}}\right)^2} - 1\right)$$
$$+ (z_1 + L_{1m})\left(\sqrt{1 + \left(\frac{y_1}{z_1 + L_{1m}}\right)^2} - 1\right) \tag{31}$$

In Formula (30), λ represents any constant indicating a wavelength of a beam, and $I_0$ represents any constant indicating the incoming intensity. A complex wave field $U_M(x_1, y_1, z_1)$ on the reflecting surface of the mirror, which is expressed in the $x_1 y_1 z_1$ coordinate system, is converted into the $x_2 y_2 z_2$ coordinate system as in Formula (32) and expressed as $U_M(x_2, y_2, z_2)$.

[Math. 22]

$$(x_2, y_2, z_2) = (x_1, y_1 \cos 2\theta_0 - z_1 \sin 2\theta_0, y_1 \sin 2\theta_0 + z_1 \cos 2\theta_0) \tag{32}$$

Further, a wave motion field $U_M(x_2, y_2, z_2)$ is propagated to a point $Q(x_Q, y_Q, z_Q)$ on the light collecting surface defined in the $x_2 y_2 z_2$ coordinate system, according to Formulas (33) and (34).

[Math. 23]

$$U_Q\left(x_Q, y_Q, z_Q\right) = \frac{1}{j\lambda} \int \frac{U_M(x_2, y_2, z_2) \exp\left(\frac{2\pi j}{\lambda} r_{MQ}\right)}{r_{MQ}} \sin\theta(x_2, y_2, z_2)\, dS \tag{33}$$

$$r_{MQ} = \sqrt{\left(x_Q - x_2\right)^2 + \left(y_Q - y_2\right)^2 + \left(z_Q - z_2\right)^2} \tag{34}$$

In Formula (33), dS represents a minute area on the reflecting surface, and $\theta(x_2, y_2, z_2)$ represents an oblique incoming angle at each position on the reflecting surface. What is output is an intensity distribution that is the square of the absolute value of a complex wave field $UQ(x_Q, y_Q, z_Q)$ on Q (Formula (35)). By a procedure described above, the intensity distribution on the light collecting surface is calculated based on wave optics.
[Math. 24]

$$I_Q\left(x_Q, y_Q, z_Q\right) = \left|U_Q\left(x_Q, y_Q, z_Q\right)\right|^2 \tag{35}$$

(Mirror design of Example 1)

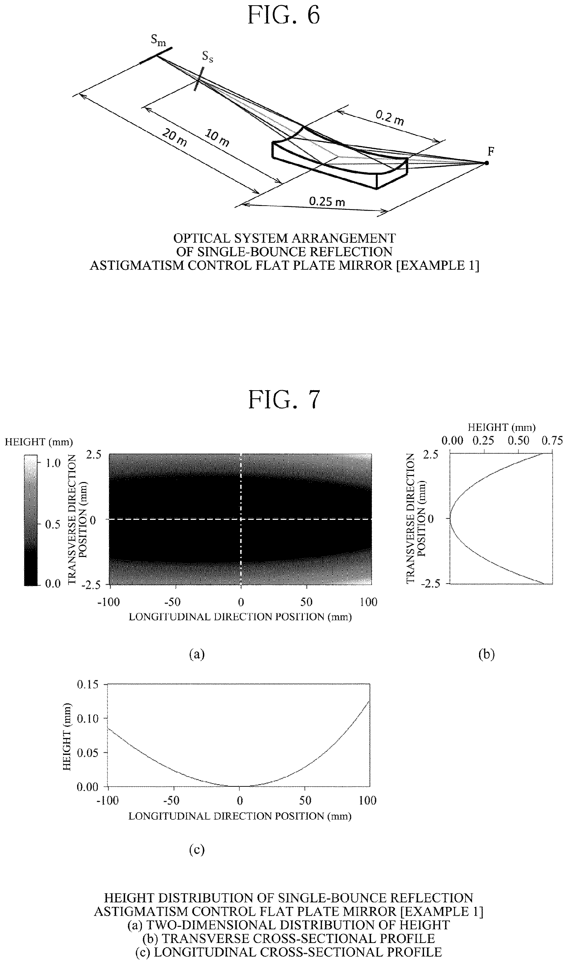

Table 2 illustrates a list of constants used in the mirror design of Example 1. The incoming length has positive values different between the vertical and horizontal directions, and the outgoing length has the same positive value in both the vertical and horizontal directions. FIG. 6 illustrates a schematic diagram of the optical system arrangement.

[Table 2]
Design Conditions of Single-Bounce Reflection Astigmatism Flat Plate Mirror [Example 1]

| Items | Value |
|---|---|
| Incoming length $L_{1m}$ of vertical (meridional) light collection (mm) | 20,000 |
| Outgoing length $L_{2m}$ of vertical (meridional) light collection (mm) | 250 |
| Incoming length $L_{1s}$ of horizontal (sagittal) light collection (mm) | 10,000 |
| Outgoing length $L_{2s}$ of horizontal (sagittal) light collection (mm) | 250 |
| Glancing angle $\theta_0$ (mrad) | 10 |
| Weighting coefficient $\alpha$ | 0.5 |
| Entire length $ML$ (mm) | 200 |
| Entire mirror width $MW$ (mm) | 5 |

(Shape of reflecting surface of Example 1)

FIG. 7 illustrates the calculated shape of the reflecting surface of the mirror. FIG. 7(a) illustrates a distribution of a height w(u, v) with respect to the mirror origin when the horizontal axis is set to the u coordinate and the vertical axis is set to the v coordinate. In addition, FIG. 7(b) illustrates a transverse cross-sectional profile indicated by a one-dot chain line in FIG. 7(a), and similarly FIG. 7(c) illustrates a longitudinal cross-sectional profile indicated by a broken line in FIG. 7(a). The reflecting surface of the mirror of Example 1 is a concave surface having different curvatures between the longitudinal direction and the transverse direction.

(Simulation result of light collection performance of Example 1)

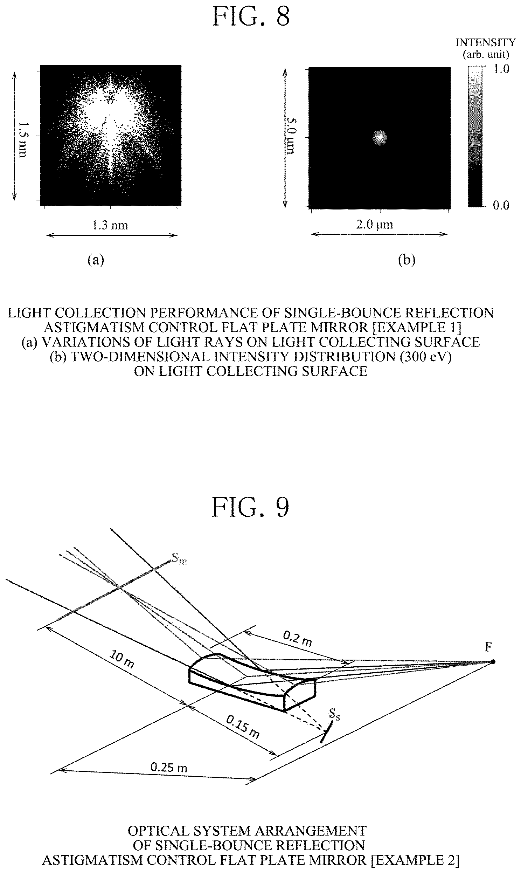

FIG. 8 illustrates a simulation result of the light collection performance. FIG. 8(a) illustrates a result of calculating variations of light rays on the light collecting surface on the basis of geometric optics. It was confirmed that all the light rays were concentrated in a region of 10 nm or less in both the horizontal and vertical directions.
In addition, FIG. 8(b) illustrates an intensity distribution on the light collecting surface, which is calculated based on wave optics by assuming a soft X-ray of 300 eV The beams are collected in a region of 160 nm × 440 nm (FWHM) in the horizontal and vertical directions, respectively. Since the numerical aperture in the horizontal direction was large, a spot size of a collected beam was further reduced.

(Mirror design of Example 2)

Table 3 illustrates a list of constants used in the mirror design of Example 2. The vertical (meridional) light collection incoming length has a positive value, whereas the horizontal (sagittal) light collection incoming length has a negative value. In other words, the incoming beam has a property to have a light source point located upstream of the mirror in the vertical direction and be collected toward one point located downstream of the mirror in the horizontal direction. The outgoing length has the same positive value in both the vertical direction and the horizontal direction. FIG. 9 illustrates a schematic diagram of the optical system arrangement. This mirror is intended to eliminate extreme astigmatism in which the positive and negative curvatures are inverted.

[Table 3]

Design Conditions of Single-Bounce Reflection Astigmatism Flat Plate Mirror [Example 2]

| Items | Value |
|---|---|
| Incoming length $L_{1m}$ of vertical (meridional) light collection (mm) | 10,000 |
| Outgoing length $L_{2m}$ of vertical (meridional) light collection (mm) | 250 |
| Incoming length $L_{1s}$ of horizontal (sagittal) light collection (mm) | -150 |
| Outgoing length $L_{2s}$ of horizontal (sagittal) light collection (mm) | 250 |
| Glancing angle $\theta_0$ (mrad) | 10 |
| Weighting coefficient $\alpha$ | 0.5 |
| Entire length $ML$ (mm) | 200 |
| Entire mirror width $MW$ (mm) | 5 |

(Shape of reflecting surface of Example 2)

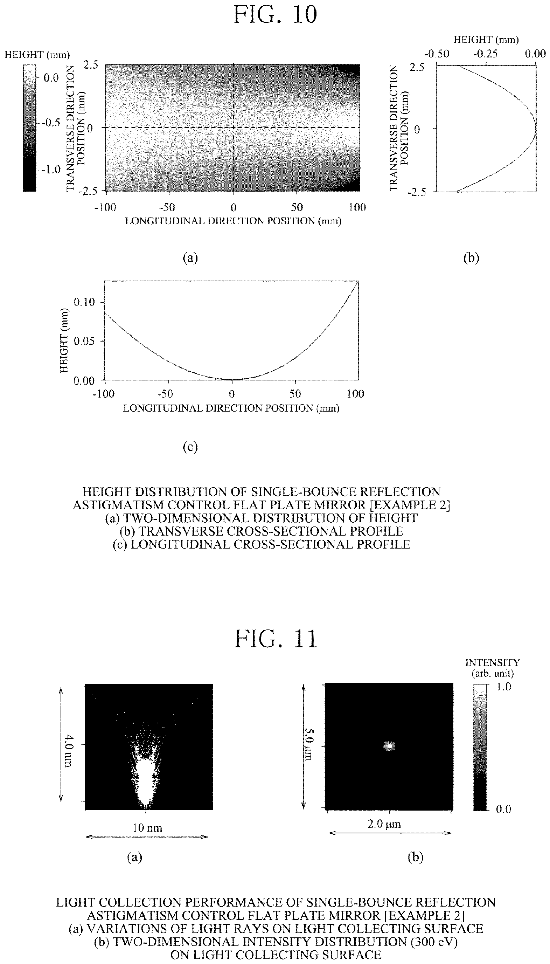

FIG. 10 illustrates the calculated shape of the reflecting surface of the mirror. FIG. 10(a) illustrates a distribution of a height w(u, v) with respect to the mirror origin when the horizontal axis is set to the u coordinate and the vertical axis is set to the v coordinate. In addition, FIG. 10(b) illustrates a transverse cross-sectional profile taken along a one-dot chain line in FIG. 10(a), and similarly FIG. 10(c) illustrates a longitudinal cross-sectional profile taken along a broken line in FIG. 10(a). The reflecting surface of the mirror of Example 2 has a saddle shape having a concave profile in the longitudinal direction and a convex profile in the transverse direction.

(Simulation result of light collection performance of Example 2)

FIG. 11 illustrates a simulation result of the light collection performance. FIG. 11(a) illustrates a result of calculating variations of light rays on the light collecting surface on the basis of geometric optics. It was confirmed that all the light rays were concentrated in a region of 10 nm or less in both the horizontal and vertical directions.

In addition, FIG. 11(b) illustrates an intensity distribution on the light collecting surface, which is calculated based on assuming a soft X-ray of 300 eV The beams are collected in a region of 160 nm × 320 nm (FWHM) in the horizontal and vertical directions, respectively. Consequently, it was shown in the simulation that the aberration of the incoming beam having the extreme astigmatism in which one side thereof is collected and the other side diverges can be eliminated by the mirror of Example 2.

(Mirror design of Example 3)

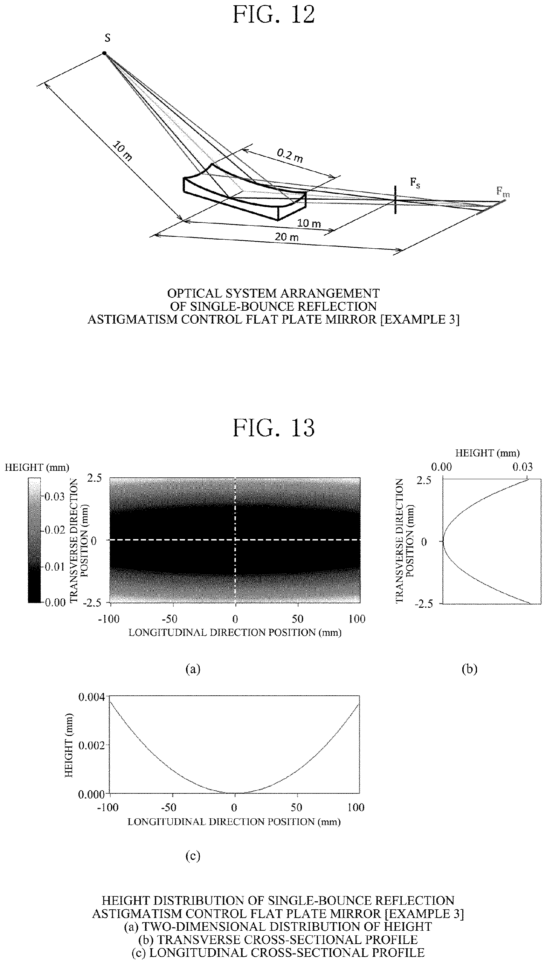

Table 4 illustrates a list of constants used in the mirror design of Example 3. The incoming length has the same positive value in both the vertical and horizontal directions, and the outgoing length has different positive values between the vertical and horizontal directions. FIG. 12 illustrates a schematic diagram of the optical system arrangement.

[Table 4]

Design Conditions of Single-Bounce Reflection Astigmatism Flat Plate Mirror [Example 3]

| Items | Value |
|---|---|
| Incoming length $L_{1m}$ of vertical (meridional) light collection (mm) | 10,000 |
| Outgoing length $L_{2m}$ of vertical (meridional) light collection (mm) | 20,000 |
| Incoming length $L_{1s}$ of horizontal (sagittal) light collection (mm) | 10,000 |

(continued)

Design Conditions of Single-Bounce Reflection Astigmatism Flat Plate Mirror [Example 3]

| Items | Value |
|---|---|
| Outgoing length $L_{2s}$ of horizontal (sagittal) light collection (mm) | 10,000 |
| Glancing angle $\theta_0$ (mrad) | 10 |
| Weighting coefficient $\alpha$ | 0.5 |
| Entire length $ML$ (mm) | 200 |
| Entire mirror width $MW$ (mm) | 5 |

(Shape of reflecting surface of Example 3)

FIG. 13 illustrates the calculated shape of the reflecting surface of the mirror. FIG. 13(a) illustrates a distribution of a height w(u, v) with respect to the mirror origin when the horizontal axis is set to the u coordinate and the vertical axis is set to the v coordinate. In addition, FIG. 13(b) illustrates a transverse cross-sectional profile taken along a one-dot chain line in FIG. 13(a), and similarly FIG. 13(c) illustrates a longitudinal cross-sectional profile taken along a broken line in FIG. 13(a). The reflecting surface of the mirror of Example 3 is a concave surface having different curvatures between the longitudinal direction and the transverse direction.

(Simulation result of light collection performance of Example 3)

FIG. 14 illustrates a simulation result of the light collection performance. FIG. 14(a) illustrates a result of calculating variations of light rays on the light collecting surface ($z_2 = L_{2m}$) in the vertical direction on the basis of geometric optics. It was confirmed that all the light rays were concentrated in a region having a width of 60 nm in the vertical direction.
In addition, FIG. 14(b) illustrates an intensity distribution on the light collecting surface in the vertical direction with respect to a soft X-ray beam of 300 eV, the intensity distribution being calculated based on wave optics. The beam is collected within a width of 39 $\mu$m (FWHM). Similarly, the light collection performance on light collecting surface ($z_2 = L_{2s}$) in the horizontal direction was evaluated by simulation. The results are illustrated in FIGS. 14(c) and 14(d). A light collection width of the horizontal light collection was 40 nm in geometric optics and 7.7 $\mu$m (FWHM) in wave optics.

(Mirror design of Example 4)

Table 5 illustrates a list of constants used in the mirror design of Example 4. Regarding vertical light collection, the incoming length and the outgoing length have positive infinity values. This indicates that the mirror does not have the light collection performance in the meridional direction. On the other hand, both the incoming length and the outgoing length of the horizontal light collection have positive values. FIG. 15 illustrates a schematic diagram of the optical system arrangement.

[Table 5]

Design Conditions of Single-Bounce Reflection Astigmatism Flat Plate Mirror [Example 4]

| Items | Value |
|---|---|
| Incoming length $L_{1m}$ of vertical (meridional) light collection (mm) | $+\infty$ |
| Outgoing length $L_{2m}$ of vertical (meridional) light collection (mm) | $-\infty$ |
| Incoming length $L_{1s}$ of horizontal (sagittal) light collection (mm) | 10,000 |
| Outgoing length $L_{2s}$ of horizontal (sagittal) light collection (mm) | 1,000 |
| Glancing angle $\theta_0$ (mrad) | 10 |
| Weighting coefficient $\alpha$ | 0 |
| Entire length $ML$ (mm) | 200 |
| Entire mirror width $MW$ (mm) | 5 |

(Shape of reflecting surface of Example 4)

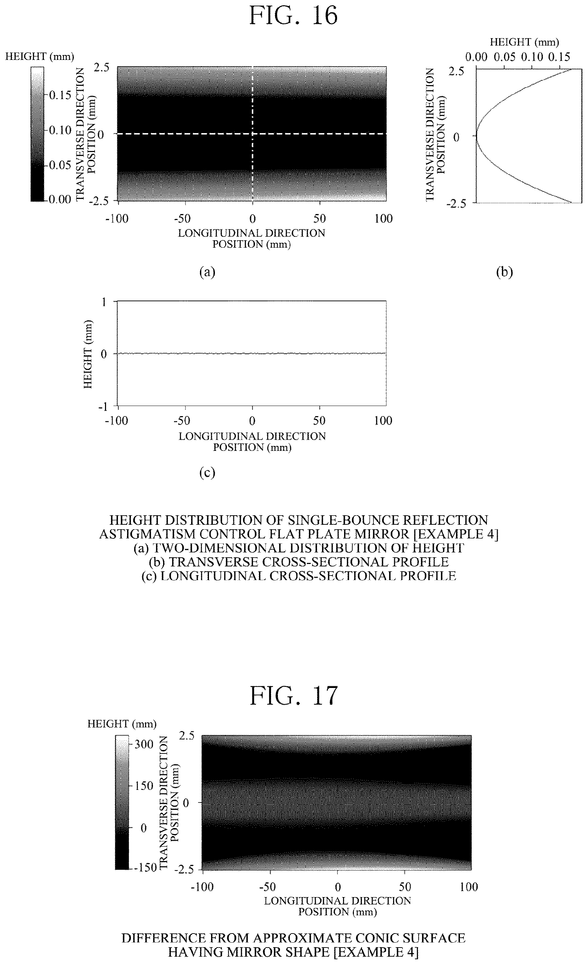

FIG. 16 illustrates the calculated shape of the reflecting surface of the mirror. FIG. 16(a) illustrates a distribution of a height w(u, v) with respect to the mirror origin when the horizontal axis is set to the u coordinate and the vertical axis is set to the v coordinate. In addition, FIG. 16(b) illustrates a transverse cross-sectional profile taken along a one-dot chain line in FIG. 16(a), and similarly FIG. 16(c) illustrates a longitudinal cross-sectional profile taken along a broken line in FIG. 16(a). It can be found from FIG. 16(c) that the reflecting surface of the mirror of Example 4 has a completely linear profile in the longitudinal direction.

In addition, FIG. 17 illustrates a difference from a truncated cone having a mirror shape. The RMS value of the difference was 77 nm. It can be found that the shape of the mirror having the light collection performance only in the sagittal direction can be fairly approximated by a truncated cone.

(Simulation result of light collection performance of Example 4)

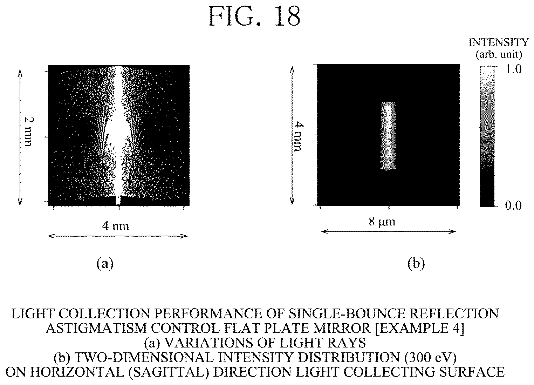

Next, FIG. 18 illustrates a simulation result of the light collection performance. FIG. 18(a) illustrates a result of calculating variations of light rays on the light collecting surface ($z_2 = L_{2s}$) in the vertical direction on the basis of geometric optics. It was confirmed that all the light rays were concentrated in a region having a width of 10 nm or less.

In addition, FIG. 18(b) illustrates an intensity distribution on the light collecting surface in the vertical direction with respect to a soft X-ray beam of 300 eV, the intensity distribution being calculated based on wave optics. The beam was collected in a region having a width of 770 nm (FWHM).

(Comparison of various mirrors)

Subsequently, comparison is made with existing mirrors such as a toroidal mirror (Comparative Example 1) and an astigmatic off-axis mirror (Comparative Example 2) for the purpose of eliminating astigmatism, which are set in the same conditions as the design conditions of Example 1 illustrated in Table 2.

(Comparison of reflecting surface shapes)

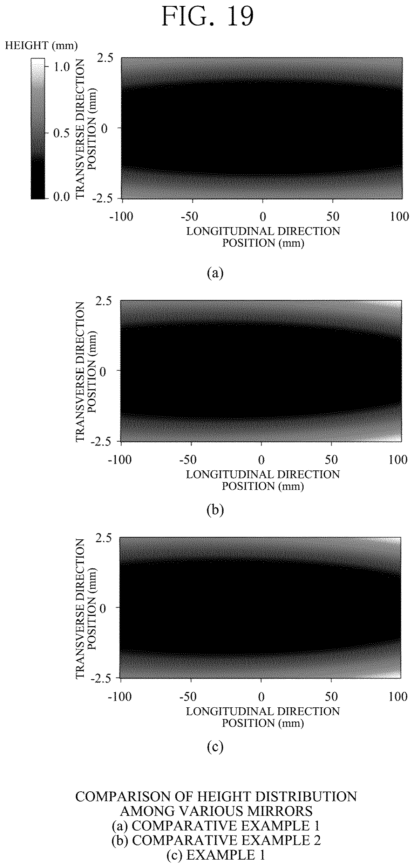

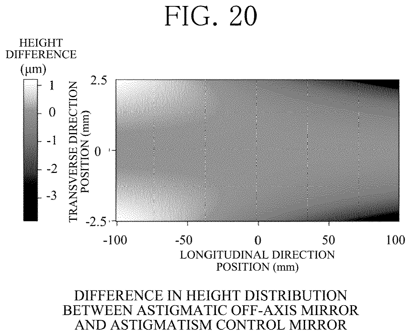

FIG. 19 illustrates the shapes of the reflecting surfaces of the mirrors of Example 1 and Comparative Examples 1 and 2. As can be found from FIGS. 19(b) and 19(c), the mirrors of Comparative Example 2 and Example 1 have substantially the same shape. However, as can be found from FIG. 20 illustrating a result obtained by subtracting the height distribution of the mirror of Example 1 from the height distribution of the mirror of Comparative Example 2, there is a difference in order of $\mu$m in the shapes of the mirrors.

(Comparison of light collection performance)

FIG. 21 illustrates a simulation result of the light collection performance. The variations of the light rays illustrated in the left column of FIG. 21 were 2 mm in Comparative Example 1 (toroidal mirror), 20 $\mu$m in Comparative Example 2 (astigmatic off-axis mirror), and 2 nm in Example 1 (astigmatism control mirror according to the present invention).

The right column of FIG. 21 illustrates the results of calculating the light collection performance for a soft X-ray beam of 300 eV based on wave optics. The toroidal mirror of Comparative Example 1 no longer collects light. The astigmatic off-axis mirror of Comparative Example 2 collects light, but has a main peak largely spreading in the horizontal direction. The astigmatism control mirror of Example 1 collects light up to the diffraction limit size in both the meridional direction and the sagittal direction. Of the three mirrors, only Example 1 (astigmatism control mirror) enables diffraction-limited light collection in the soft X-ray region.

**Claims**

1. A method for designing a mirror manufactured by forming a reflecting surface on a plate surface, the method comprising:

    defining an optical axis of an incoming beam to the mirror as a $z_1$ axis, and defining a cross section orthogonal to the $z_1$ axis as an $x_1y_1$ plane;
    defining an optical axis of an outgoing beam from the mirror as a $z_2$ axis, and defining a cross section orthogonal to the $z_2$ axis as an $x_2y_2$ plane;
    setting the $x_1$ axis and the $x_2$ axis to be parallel to a sagittal direction of the reflecting surface;
    causing incoming beams to have a light source for light collection in the sagittal direction at a position displaced by $L_{1s}$ in a $z_1$-axis direction from an intersection point $M_0$ on the $z_1$ axis on the reflecting surface between the $z_1$ axis and the $z_2$ axis, and a light source for light collection in a meridional direction at a position displaced by $L_{1m}$ in the $z_1$-axis direction from the intersection point $M_0$ on the $z_1$ axis;
    causing outgoing beams to be collected at a position displaced by $L_{2s}$ in a $z_2$-axis direction from the intersection

point $M_0$ on the $z_2$ axis for light collection in a sagittal direction, and to be collected at a position displaced by $L_{2m}$ in the $z_2$-axis direction from the intersection point $M_0$ on the $z_2$ axis for light collection in a meridional direction; causing all incoming light rays passing through the mirror to pass through both a sagittal light source ray and a meridional light source ray, the sagittal light source ray passing through a position of the light source in the light collection in the sagittal direction and extending in a direction orthogonal to both the $x_1$ axis and the $z_1$ axis, the meridional light source ray passing through a position of the light source in light collection in the meridional direction and extending in a direction orthogonal to both the $y_1$ axis and the $z_1$ axis;

causing all outgoing light rays emitted from the mirror to pass through both a sagittal collected light ray and a meridional collected light ray, the sagittal collected light ray passing through a collecting position in the light collection in the sagittal direction and extending in a direction orthogonal to both the $x_2$ axis and the $z_2$ axis, the meridional collected light ray passing through a collecting position in the light collection in the meridional direction and extending in a direction orthogonal to both the $y_2$ axis and the $z_2$ axis;

representing any point on the reflecting surface of the mirror by M, expressing coordinates of an intersection point between the sagittal light source ray and an incoming light ray to the M point and an intersection point between the meridional light source ray and the incoming light ray to the M point by using the $L_{1s}$ and the $L_{1m}$, and expressing coordinates of an intersection point between an outgoing light ray from the M point and the sagittal collected light ray and an intersection point between the outgoing light ray from the M point and the meridional collected light ray by using the $L_{2s}$ and the $L_{2m}$; and

designing the mirror by using design formulas of the reflecting surface derived based on the coordinates and a condition that an optical path length from a light source position to a light collection position is constant with respect to any point on the reflecting surface for both the light collection in the sagittal direction and the light collection in the meridional direction.

2. The method for designing a mirror according to claim 1, wherein

the sagittal light source ray and the meridional light source ray are defined as a straight line $S_s$ extending in a $y_1$-axis direction and a straight line $S_m$ extending in an $x_1$-axis direction, respectively,

the sagittal collected light ray and the meridional collected light ray are defined as a straight line $F_s$ extending in a $y_2$-axis direction and a straight line $F_m$ extending in an $x_2$-axis direction, respectively,

an incoming length from the light source position to the M point with respect to the light collection in the sagittal direction is obtained as a distance to the M point from an intersection point on a side close to the meridional light source ray $S_m$ of two intersection points between the incoming light ray and an equiphase plane $A_{1s}$, the equiphase plane $A_{1s}$ being a rotated arcuate plane obtained by rotating, around the sagittal light source ray $S_s$, an arc that is formed around an intersection point $P_{m0}$ between the meridional light source ray $S_m$ and the $z_1$ axis and extends in a direction orthogonal to the $x_1$ axis through an intersection point $P_{s0}$ between the sagittal light source ray $S_s$ and the $z_1$ axis,

an outgoing length from the M point to the light collection position with respect to the light collection in the sagittal direction is obtained as a distance to the M point from an intersection point on a side close to the meridional collected light ray $F_m$ of two intersection points between the outgoing light ray and an equiphase plane $A_{2s}$, the equiphase plane $A_{2s}$ being a rotated arcuate plane obtained by rotating, around the sagittal collected light ray $F_s$, an arc that is formed around an intersection point $Q_{m0}$ between the meridional collected light ray $F_m$ and the $z_2$ axis and extends in a direction orthogonal to the $x_2$ axis through an intersection point $Q_{s0}$ between the sagittal collected light ray $F_s$ and the $z_2$ axis,

an incoming length from the light source position to the M point with respect to the light collection in the meridional direction is obtained as a distance to the M point from an intersection point on a side close to the sagittal light source ray $S_s$ of two intersection points between the incoming light ray and an equiphase plane $A_{1m}$, the equiphase plane $A_{1m}$ being a rotated arcuate plane obtained by rotating, around the meridional light source ray $S_m$, an arc that is formed around the intersection point $P_{s0}$ between the sagittal light source ray $S_s$ and the $z_1$ axis and extends in a direction orthogonal to the $y_1$ axis through the intersection point $P_{m0}$ between the meridional light source ray $S_m$ and the $z_1$ axis,

an outgoing length from the M point to the light collection position with respect to the light collection in the meridional direction is obtained as a distance to the M point from an intersection point on a side close to the sagittal collected light ray $F_s$ of two intersection points between the outgoing light ray and an equiphase plane $A_{2m}$, the equiphase plane $A_{2m}$ being a rotated arcuate plane obtained by rotating, around the meridional collected light ray $F_m$, an arc that is formed around the intersection point $Q_{s0}$ between the sagittal collected light ray $F_s$ and the $z_2$ axis and extends in a direction orthogonal to the $y_2$ axis through the intersection point $Q_{m0}$ between the meridional collected light ray $F_m$ and the $z_2$ axis, and

the optical path length is calculated for the light collection in the sagittal direction and the light collection in the meridional direction.

3.  The method for designing a mirror according to claim 2, wherein

the distance to the M point from the intersection point on the side close to the meridional light source ray $S_m$ of the two intersection points between the incoming light ray and the equiphase plane $A_{1s}$ is obtained by obtaining a distance to the M point from an intersection point $P_s$ between the incoming light ray and the sagittal light source ray $S_s$, and adding or subtracting, to or from the distance, a distance from the intersection point $P_s$ to the arc defining the equiphase plane $A_{1s}$,

the distance to the M point from the intersection point on the side close to the meridional collected light ray $F_m$ of the two intersection points between the outgoing light ray and the equiphase plane $A_{2s}$ is obtained by obtaining a distance to the M point from an intersection point $Q_s$ between the outgoing light ray and the sagittal collected light ray $F_s$, and adding or subtracting, to or from the distance, a distance from the intersection point $Q_s$ to the arc defining the equiphase plane $A_{2s}$,

the distance to the M point from the intersection point on the side close to the sagittal light source ray $S_s$ of the two intersection points between the incoming light ray and the equiphase plane $A_{1m}$ is obtained by obtaining a distance to the M point from an intersection point $P_m$ between the incoming light ray and the meridional light source ray $S_m$, and adding or subtracting, to or from the distance, a distance from the intersection point $P_m$ to the arc defining the equiphase plane $A_{1m}$, and

the distance to the M point from the intersection point on the side close to the sagittal collected light ray $F_s$ of the two intersection points between the outgoing light ray and the equiphase plane $A_{2m}$ is obtained by obtaining a distance to the M point from an intersection point $Q_m$ between the outgoing light ray and the meridional collected light ray $F_m$, and adding or subtracting, to or from the distance, a distance from the intersection point $Q_m$ to the arc defining the equiphase plane $A_{2m}$.

4.  The method for designing a mirror according to any one of claims 1 to 3, wherein

a plane that includes an intersection point $M_0$ on the reflecting surface between the $z_1$ axis and the $z_2$ axis and is in contact with the reflecting surface is defined as a uv plane,

a direction of a normal line passing through the $M_0$ in the uv plane is defined as a w axis,

a v axis is a direction orthogonal to both the $z_1$ axis and the $z_2$ axis, and a u axis is a direction orthogonal to both the v axis and the w axis,

an orthogonal coordinate system is defined based on a mirror, in which the intersection point $M_0$ is set as an origin, and an oblique incoming angle formed by the uv plane and an optical axis $z_1$ is represented by $\theta_0$,

the coordinates are transformed into an $x_1 y_1 z_1$ coordinate system based on an optical axis of the incoming beam and into an $x_2 y_2 z_2$ coordinate system based on an optical axis of the outgoing beam, respectively, and

a design formula is expressed by a uvw coordinate system.

5.  The method for designing a mirror according to claim 4, wherein

the design formula is obtained from a following formula (1) obtained by weighting both a first formula $f_s(u, v, w) = 0$ derived from a condition that an optical path length from a light source point to a light collection point is constant for the light collection in the sagittal direction, and a second formula $f_m(u, v, w) = 0$ derived from a condition that an optical path length from the light source point to the light collection point is constant for the light collection in the meridional direction. [Math. 1]

$$f(u, v, w) = \alpha f_s(u, v, w) + \beta f_m(u, v, w) = 0 \qquad (1)$$
$$0 \leqq \alpha \leqq 1, \ \beta = 1 - \alpha$$

6.  An astigmatism control mirror having a reflecting surface satisfying the design formula according to any one of claims 1 to 5, wherein

values of the $L_{1s}$ and the $L_{1m}$ are different from each other, and values of the $L_{2s}$ and the $L_{2m}$ are equal to each other, and

outgoing beams which are collected at one point are obtained from an incoming beam having astigmatism.

7.  An astigmatism control mirror having a reflecting surface satisfying the design formula according to any one of claims 1 to 5, wherein

values of the $L_{1s}$ and the $L_{1m}$ are equal to each other, and values of the $L_{2s}$ and the $L_{2m}$ are different from each other, and

an outgoing beam having astigmatism is obtained from an incoming beam diverging from one point.

8. An astigmatism control mirror having a reflecting surface satisfying the design formula according to any one of claims 1 to 5, wherein

values of the $L_{1m}$ and the $L_{2m}$ are positive or negative infinity, and each of the $L_{1s}$ and the $L_{2s}$ has a predetermined value (where $L_{1s} + L_{2s} \neq 0$), and

the astigmatism control mirror has light collection performance only in the sagittal direction.

# FIG. 1

COORDINATE SYSTEM BASED ON MIRROR

# FIG. 2

COORDINATE SYSTEM BASED ON INCOMING BEAM

# FIG. 3

## FIG. 4

## FIG. 5

# FIG. 6

OPTICAL SYSTEM ARRANGEMENT
OF SINGLE-BOUNCE REFLECTION
ASTIGMATISM CONTROL FLAT PLATE MIRROR [EXAMPLE 1]

# FIG. 7

(a)

(b)

(c)

HEIGHT DISTRIBUTION OF SINGLE-BOUNCE REFLECTION
ASTIGMATISM CONTROL FLAT PLATE MIRROR [EXAMPLE 1]
(a) TWO-DIMENSIONAL DISTRIBUTION OF HEIGHT
(b) TRANSVERSE CROSS-SECTIONAL PROFILE
(c) LONGITUDINAL CROSS-SECTIONAL PROFILE

# FIG. 8

INTENSITY
(arb. unit)

1.5 nm

1.3 nm

(a)

5.0 μm

2.0 μm

(b)

1.0

0.0

LIGHT COLLECTION PERFORMANCE OF SINGLE-BOUNCE REFLECTION
ASTIGMATISM CONTROL FLAT PLATE MIRROR [EXAMPLE 1]
(a) VARIATIONS OF LIGHT RAYS ON LIGHT COLLECTING SURFACE
(b) TWO-DIMENSIONAL INTENSITY DISTRIBUTION (300 eV)
ON LIGHT COLLECTING SURFACE

# FIG. 9

$S_m$

0.2 m

F

10 m

0.15 m

$S_s$

0.25 m

OPTICAL SYSTEM ARRANGEMENT
OF SINGLE-BOUNCE REFLECTION
ASTIGMATISM CONTROL FLAT PLATE MIRROR [EXAMPLE 2]

# FIG. 10

HEIGHT (mm)

TRANSVERSE DIRECTION POSITION (mm)

LONGITUDINAL DIRECTION POSITION (mm)

(a)

HEIGHT (mm)

(b)

HEIGHT (mm)

LONGITUDINAL DIRECTION POSITION (mm)

(c)

HEIGHT DISTRIBUTION OF SINGLE-BOUNCE REFLECTION
ASTIGMATISM CONTROL FLAT PLATE MIRROR [EXAMPLE 2]
(a) TWO-DIMENSIONAL DISTRIBUTION OF HEIGHT
(b) TRANSVERSE CROSS-SECTIONAL PROFILE
(c) LONGITUDINAL CROSS-SECTIONAL PROFILE

# FIG. 11

INTENSITY (arb. unit)

4.0 nm

10 nm

(a)

5.0 μm

2.0 μm

(b)

LIGHT COLLECTION PERFORMANCE OF SINGLE-BOUNCE REFLECTION
ASTIGMATISM CONTROL FLAT PLATE MIRROR [EXAMPLE 2]
(a) VARIATIONS OF LIGHT RAYS ON LIGHT COLLECTING SURFACE
(b) TWO-DIMENSIONAL INTENSITY DISTRIBUTION (300 eV)
ON LIGHT COLLECTING SURFACE

# FIG. 12

OPTICAL SYSTEM ARRANGEMENT
OF SINGLE-BOUNCE REFLECTION
ASTIGMATISM CONTROL FLAT PLATE MIRROR [EXAMPLE 3]

# FIG. 13

(a)

(b)

(c)

HEIGHT DISTRIBUTION OF SINGLE-BOUNCE REFLECTION
ASTIGMATISM CONTROL FLAT PLATE MIRROR [EXAMPLE 3]
(a) TWO-DIMENSIONAL DISTRIBUTION OF HEIGHT
(b) TRANSVERSE CROSS-SECTIONAL PROFILE
(c) LONGITUDINAL CROSS-SECTIONAL PROFILE

# FIG. 14

(a)

INTENSITY
(arb. unit)

(b)

(c)

INTENSITY
(arb. unit)

(d)

LIGHT COLLECTION PERFORMANCE OF SINGLE-BOUNCE REFLECTION
ASTIGMATISM CONTROL FLAT PLATE MIRROR [EXAMPLE 3]
(a) VARIATIONS OF LIGHT RAY
(b) TWO-DIMENSIONAL INTENSITY DISTRIBUTION (300 eV)
ON VERTICAL (MERIDIONAL) DIRECTION LIGHT COLLECTING SURFACE

(c) VARIATIONS OF LIGHT RAYS
(d) TWO-DIMENSIONAL INTENSITY DISTRIBUTION (300 eV)
ON HORIZONTAL (SAGITTAL) DIRECTION LIGHT COLLECTING SURFACE

# FIG. 15

OPTICAL SYSTEM ARRANGEMENT
OF SINGLE-BOUNCE REFLECTION
ASTIGMATISM CONTROL FLAT PLATE MIRROR [EXAMPLE 4]

# FIG. 16

(a)

(b)

(c)

HEIGHT DISTRIBUTION OF SINGLE-BOUNCE REFLECTION
ASTIGMATISM CONTROL FLAT PLATE MIRROR [EXAMPLE 4]
(a) TWO-DIMENSIONAL DISTRIBUTION OF HEIGHT
(b) TRANSVERSE CROSS-SECTIONAL PROFILE
(c) LONGITUDINAL CROSS-SECTIONAL PROFILE

# FIG. 17

DIFFERENCE FROM APPROXIMATE CONIC SURFACE
HAVING MIRROR SHAPE [EXAMPLE 4]

# FIG. 18

(a)

(b)

LIGHT COLLECTION PERFORMANCE OF SINGLE-BOUNCE REFLECTION
ASTIGMATISM CONTROL FLAT PLATE MIRROR [EXAMPLE 4]
(a) VARIATIONS OF LIGHT RAYS
(b) TWO-DIMENSIONAL INTENSITY DISTRIBUTION (300 eV)
ON HORIZONTAL (SAGITTAL) DIRECTION LIGHT COLLECTING SURFACE

# FIG. 19

HEIGHT (mm)

(a)

(b)

(c)

COMPARISON OF HEIGHT DISTRIBUTION
AMONG VARIOUS MIRRORS
(a) COMPARATIVE EXAMPLE 1
(b) COMPARATIVE EXAMPLE 2
(c) EXAMPLE 1

# FIG. 20

DIFFERENCE IN HEIGHT DISTRIBUTION
BETWEEN ASTIGMATIC OFF-AXIS MIRROR
AND ASTIGMATISM CONTROL MIRROR

# FIG. 21

(a)

(b)

(c)

(d)

(e)

(f)

COMPARISON OF LIGHT COLLECTION PERFORMANCE
AMONG VARIOUS MIRRORS
LEFT COLUMN: GEOMETRIC OPTICS
RIGHT COLUMN: WAVE OPTICS
(a) VARIATIONS OF LIGHT RAYS
(b) TWO-DIMENSIONAL INTENSITY DISTRIBUTION (300 eV)
IN LIGHT COLLECTION OF TOROIDAL MIRROR

(c) VARIATIONS OF LIGHT RAYS
(d) TWO-DIMENSIONAL INTENSITY DISTRIBUTION (300 eV)
IN LIGHT COLLECTION OF ASTIGMATIC OFF-AXIS MIRROR

(e) VARIATIONS OF LIGHT RAYS
(f) TWO-DIMENSIONAL INTENSITY DISTRIBUTION (300 eV)
IN LIGHT COLLECTION OF ASTIGMATISM CONTROL MIRROR

## INTERNATIONAL SEARCH REPORT

| International application No. |
| --- |
| **PCT/JP2022/000568** |

**A.      CLASSIFICATION OF SUBJECT MATTER**

*G02B 17/06*(2006.01)i; *G02B 5/10*(2006.01)i
FI:   G02B17/06; G02B5/10 A

According to International Patent Classification (IPC) or to both national classification and IPC

**B.       FIELDS SEARCHED**

Minimum documentation searched (classification system followed by classification symbols)

G02B17/06; G02B5/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.       DOCUMENTS CONSIDERED TO BE RELEVANT**

| Category* | Citation of document, with indication, where appropriate, of the relevant passages | Relevant to claim No. |
| --- | --- | --- |
| X | JP 2005-530168 A (XENOCS) 06 October 2005 (2005-10-06) | 6–8 |
|  | paragraphs [0043]-[0063], [0070]-[0074], fig. 3 |  |
| Y | paragraphs [0043]-[0063], [0070]-[0074], fig. 3 | 6–8 |
| A | paragraphs [0043]-[0063], [0070]-[0074], fig. 3 | 1-5 |
| Y | JP 2014-163667 A (FUJITSU LTD) 08 September 2014 (2014-09-08) | 6–8 |
|  | paragraphs [0018], [0019], fig. 6 |  |
| A | paragraphs [0018], [0019], fig. 6 | 1-5 |
| Y | JP 2005-530170 A (XENOCS) 06 October 2005 (2005-10-06) | 6–8 |
|  | paragraphs [0081]-[0112], [0140]-[0146], fig. 1, 2 |  |
| A | paragraphs [0081]-[0112], [0140]-[0146], fig. 1, 2 | 1-5 |
| A | WO 2015/004934 A1 (THE UNIVERSITY OF TOKYO) 15 January 2015 (2015-01-15) | 1-8 |
|  | entire text, all drawings |  |
| A | JP 2002-221596 A (NIKON CORP) 09 August 2002 (2002-08-09) | 1-8 |
|  | entire text, all drawings |  |

☑ Further documents are listed in the continuation of Box C.     ☑ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date |  |  |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means |  |  |
| "P" | document published prior to the international filing date but later than the priority date claimed | "&" | document member of the same patent family |

| Date of the actual completion of the international search | Date of mailing of the international search report |
| --- | --- |
| **03 March 2022** | **22 March 2022** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 **Japan** |  |
|  | Telephone No. |

Form PCT/ISA/210 (second sheet) (January 2015)

**INTERNATIONAL SEARCH REPORT**

| International application No. |
| --- |
| **PCT/JP2022/000568** |

### C.      DOCUMENTS CONSIDERED TO BE RELEVANT

| Category* | Citation of document, with indication, where appropriate, of the relevant passages | Relevant to claim No. |
| --- | --- | --- |
| A | JP 2014-6457 A (JTEC CORP) 16 January 2014 (2014-01-16)<br>      entire text, all drawings | 1-8 |

Form PCT/ISA/210 (second sheet) (January 2015)

**INTERNATIONAL SEARCH REPORT**
Information on patent family members

International application No.

**PCT/JP2022/000568**

| Patent document cited in search report | | | Publication date (day/month/year) | Patent family member(s) | | | Publication date (day/month/year) |
|---|---|---|---|---|---|---|---|
| JP | 2005-530168 | A | 06 October 2005 | US | 2005/0117239 | A1 | |
| | | | | US | 2006/0018429 | A1 | |
| | | | | paragraphs [0057]-[0122], [0149]-[0158], fig. 3 | | | |
| | | | | WO | 2004/001769 | A1 | |
| | | | | WO | 2004/001770 | A1 | |
| | | | | EP | 1468428 | A1 | |
| | | | | EP | 1514279 | A1 | |
| | | | | EP | 1732087 | A2 | |
| | | | | DE | 20320792 | U1 | |
| | | | | DE | 60308645 | T2 | |
| | | | | AT | 341083 | T | |
| | | | | CN | 1675720 | A | |
| | | | | CN | 1662999 | A | |
| | | | | AT | 421152 | T | |
| | | | | AU | 2003260613 | A1 | |
| | | | | AU | 2003264670 | A1 | |
| JP | 2014-163667 | A | 08 September 2014 | (Family: none) | | | |
| JP | 2005-530170 | A | 06 October 2005 | US | 2005/0117239 | A1 | |
| | | | | paragraphs [0139]-[0161], [0193]-[0202], fig. 1, 2 | | | |
| | | | | US | 2006/0018429 | A1 | |
| | | | | WO | 2004/001770 | A1 | |
| | | | | WO | 2004/001769 | A1 | |
| | | | | EP | 1468428 | A | |
| | | | | EP | 1514279 | A | |
| | | | | EP | 1732087 | A2 | |
| | | | | DE | 20320792 | U1 | |
| | | | | DE | 60308645 | T2 | |
| | | | | AT | 341083 | T | |
| | | | | CN | 1675720 | A | |
| | | | | CN | 1662999 | A | |
| | | | | AT | 421152 | T | |
| | | | | AU | 2003260613 | A1 | |
| | | | | AU | 2003264670 | A1 | |
| WO | 2015/004934 | A1 | 15 January 2015 | US | 2016/0163409 | A1 | |
| | | | | entire text, all drawings | | | |
| | | | | CA | 2917764 | A | |
| | | | | KR | 10-2016-0030125 | A | |
| JP | 2002-221596 | A | 09 August 2002 | (Family: none) | | | |
| JP | 2014-6457 | A | 16 January 2014 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WILLIAM A. RENSE ; T. VIOLETT.** Method of Increasing the Speed of a Grazing-Incidence Spectrograph. *JOURNAL OF THE OPTICAL SOCIETY OF AMERICA,* February 1959, vol. 49 (2), 139-141

- **A. WAGNER-GENTNER ; U. U. GRAF ; M. PHILIPP ; D. RABANUS.** A simple method to design astigmatic off-axis mirrors. *Infrared Physics & Technology,* 2007, vol. 50, 42-46